# EUROPÄISCHE PATENTSCHRIFT

(11) **EP 3 729 067 B1**
(45) Veröffentlichungstag und Bekanntmachung des Hinweises auf die Patenterteilung: **03.11.2021**
(21) Anmeldenummer: 18839800.2
(22) Anmeldetag: 20.12.2018
(51) Int. Cl.: G01N 27/30, G01N 27/401

(54) **REFERENZELEKTRODE ZUR POTENTIOMETRISCHEN MESSUNG VON IONENKONZENTRATIONEN**
REFERENCE ELECTRODE FOR POTENTIOMETRIC MEASUREMENT OF ION CONCENTRATIONS
ÉLECTRODE DE RÉFÉRENCE POUR LA MESURE POTENTIOMÈTRIQUE DE CONCENTRATIONS D'IONS

(30) Priorität: 21.12.2017 AT 4982017
(43) Veröffentlichungstag der Anmeldung: 28.10.2020
(73) Patentinhaber: ERBA Technologies Austria GmbH, 8020 Graz (AT)
(72) Erfinder: OFFENBACHER, Helmut, 8020 Graz (AT); SALLEGGER, Werner, 8055 Graz (AT); KÖSTLER, Stefan, 8047 Kainbach bei Graz (AT)
(74) Vertreter: Keschmann, Marc
(86) Internationale Anmeldenummer: PCT/AT2018/000098
(87) Internationale Veröffentlichungsnummer: WO 2019/118993

(56) Entgegenhaltungen:
- EP-A1- 1 956 368
- DE-A1-102012 102 321
- US-A- 4 434 249

## Beschreibung

Die Erfindung betrifft eine Referenzelektrode zur potentiometrischen Messung von Ionenkonzentrationen, umfassend einen mit wenigstens einem Elektrolytsalz gefüllten quellfähigen Polymerkörper und ein sich im Polymerkörper befindliches Ableitelement zweiter Art, vorzugsweise vom Typ Ag/AgCl.

Zur potentiometrischen Messung von Ionenkonzentrationen mit Hilfe von ionensensitiven Elektroden werden jeweils eine spezifische aktive Elektrode und eine Referenzelektrode, die mit einer Probe in Kontakt sind, eingesetzt. Nach bekannten Gesetzen ist die Potentialdifferenz zwischen den Elektroden eines solchen Elektrodenpaars ein Maß für die gesuchte Ionenkonzentration in der Probe.

Bei Referenzelektroden zweiter Art ist ein Referenzsystem mit einem Ableitelement aus einem Metall vorgesehen, das mit einem Überzug aus dessen schwerlöslichem Metallsalz versehen ist, wobei das Referenzsystem im Kontakt mit einem Elektrolyten, dem sog. Innenelektrolyten, steht. Weit verbreitet sind Referenzelektroden mit einem Ableitelement aus Silber, das mit einem AgCl-Überzug versehen ist. Als Elektrolytsalz ist meist KCl und/oder NaCl vorgesehen. Das elektrochemische Potential einer Ag/AgCl/KCl-Elektrode ist von der Temperatur und der Chloridionenaktivität abhängig. Unter der Voraussetzung, dass der Elektrolyt gesättigt vorliegt und damit die Chloridionenaktivität konstant ist, ist bei einer definierten Temperatur auch das Potential der Ag/AgCl/KCl-Elektrode konstant, sodass eine solche Elektrode als Bezugselektrode einsetzbar ist.

Die Eigenschaften solcher Referenzelektroden werden insbesondere durch die Verlustrate des Elektrolyten bestimmt, die durch die Auslaugung des Elektrolyten bei Kontakt mit der Probe hervorgerufen wird. Bei einer solchen Auslaugung des Elektrolyten können an der Referenzelektrode Potentialschwankungen auftreten, die sich direkt auf das Verhalten der Arbeitselektrode auswirken und somit zu Messungenauigkeiten führen. Deshalb ist man bestrebt, eine definierte und konstant gehaltene Chlorid-Konzentration im Elektrolyten zu halten, damit die Referenzelektrode ein definiertes Potential liefert.

Um potentialstabile Referenzelektroden zu erhalten, steht der Innenelektrolytraum meist über ein ionenpermeables Diaphragma mit der wässrigen Probe in Verbindung. Um das am Übergang zwischen Diaphragma und Probenmedium auftretende Liquid-Junction-Potential so gering wie möglich zu halten, d.h. definierte Verhältnisse im Diaphragmenbereich bezüglich Vermischung der Probe mit dem Innenelektrolyt zu schaffen, erzeugt man einen während der Messung aufrecht erhaltenen permanenten Elektrolytsalz-Strom, der durch das Diaphragma vom Innenelektrolytraum zur Probe hin gerichtet ist. KCl wird deshalb bevorzugt als Chloridkomponente verwendet, weil die Permeabilitäten für Kalium- und Chloridionen beim Übertritt aus dem Diaphragma in die Probe in etwa gleich sind, was zu einer Minimierung des Vermischungspotentials führt.

Es sind bereits Ausbildungen von Referenzelektroden bekannt geworden, bei denen die Elektrolytlösung durch Zugabe von Gelbildnern verfestigt ist. Weiters sind Referenzelektroden bekannt, bei denen das Elektrolytsalz in ein Polymer eingebracht ist und gemeinsam mit den ausgehärteten Polymeren den konstruktiven Kern einer robusten Referenzelektrode bildet, für deren Funktion kein zusätzliches Diaphragma erforderlich ist (EP 247535 A2).

Weiters sind Festkörper-Referenzelektroden bekannt geworden, die sich besonders für Ausbildungen in der Dickschicht-Technologie eignen. Mit Dickschicht-Verfahren können miniaturisierte Referenzelektroden unter Verwendung ausschließlich fester Elektrodenbestandteile hergestellt werden.

EP 1 956 368 A1 zeigt und beschreibt eine Referenzelektrode zur potentiometrischen Messung von Ionenkonzentrationen, umfassend einen mit wenigstens einem Elektrolytsalz gefüllten, quellfähigen Polymerkörper und ein sich im Polymerkörper befindliches Ableitelement zweiter Art, vorzugsweise vom Typ Ag/AgCl. Der Polymerkörper ist aus hydrophoben Prepolymersegmenten aufgebaut, die durch organische, hydrophile Polymerketten miteinander dreidimensional vernetzt sind.

DE 10 2012 102321 A1 offenbart eine Referenzelektrode mit einem polymerisierten Festkörperelektrolyt, der durch Polymerisation von hydrophilen Monomethacrylaten mit Dimethacrylaten hergestellt ist.

Bei Festkörper-Referenzelektroden, bei denen das Elektrolytsalz in einem Polymerkörper eingebettet ist, sind in der Literatur auch Ausführungen beschrieben, bei denen ein Elektrolytsalz-Reservoir in Form von kristallinem KCl ausgebildet wird, das mit in wässrigen Medien mehr oder weniger stark quellenden Polymeren abgemischt ist. Die KCl-Kristallsuspension sorgt hier für eine definiert hohe Chlorid-Konzentration im Polymerkörper. Problematisch ist jedoch der Umstand, dass alle Alkalichloride in Wasser so gut löslich sind, dass erst nach deren vollständig erfolgter Auflösung im Polymerkörper Wasser für die ausreichende Quellung desselben zur Verfügung steht. Dieses Faktum schlägt sich in einer Verlängerung der sogenannten Wetup-Phase nieder, das ist jene Zeitspanne, die der Polymerinnenelektrolyt bis zum Erreichen einer Potentialkonstanz der Referenzelektrode benötigt.

Die Erfindung zielt daher darauf ab, eine Referenzelektrode der eingangs genannten Art, bei der ein quellfähiger Polymerkörper mit wenigstens einem Elektrolytsalz gefüllt ist, dahingehend zu verbessern, dass die Wetup-Phase verkürzt werden kann. Weiters zielt die Erfindung darauf ab, verbesserte Haftungseigenschaften der Referenzelektrode auf Polymeruntergründen zu gewährleisten, um z.B. eine bessere Haftung an einem Innenelektrolytgehäuse oder im Falle von Dickschichtanwendungen eine bessere Haftung an dem Sensoruntergrund zu erreichen. Außerdem zielt die Erfindung darauf ab, eine Referenzelektrode mit einer über lange Zeit gegebenen Potentialstabilität zu schaffen.

Zur Lösung dieser Aufgaben besteht die Erfindung bei einer Referenzelektrode der eingangs genannten Art im Wesentlichen darin, dass der Polymerkörper aus organischen, hydrophoben Prepolymersegmenten aufgebaut ist, die durch organische hydrophile Polymerketten miteinander dreidimensional vernetzt sind.

Zur Lösung der genannten Aufgaben sieht die Erfindung weiters ein Verfahren zur Herstellung eines Polymerkörpers zur Verwendung für eine Referenzelektrode vor, umfassend die Schritte:
a) Herstellen einer Mischung aus organischen, hydrophoben Prepolymersegmenten sowie organischen, hydrophilen und ggf. hydrophoben Monomeren, um ein Prepolymer-Monomer-Gemisch zu erhalten,
b) Zugeben einer Lösung wenigstens eines Elektrolytsalzes zu dem Prepolymer-Monomer-Gemisch,
c) Vermischen der Elektrolytsalzlösung mit dem Prepolymer-Monomer-Gemisch, wobei das wenigstens eine Elektrolytsalz teilweise mikrokristallin ausfällt und teilweise in der Lösung verbleibt,
d) Polymerisieren der Monomere zu hydrophilen Polymerketten, welche die Prepolymersegmente dreidimensional miteinander vernetzen, wodurch der Polymerkörper erhalten wird, in dem das wenigstens eine Elektrolytsalz eingebettet ist.

Erfindungsgemäß wird bei der Referenzelektrode somit ein durch organische, hydrophile Brückenelemente vernetztes hydrophobes bzw. unpolares, organisches Prepolymer verwendet, welches bereits vor der Härtung das der Quellung vorweggenommene Wasser als gesättigte Lösung des Elektrolytsalzes enthält, was zur Folge hat, dass das elektrolythaltige, vernetzte Polymer eine stark reduzierte Wetup-Phase besitzt und nach wässrigem Äquilibrieren der Übergangsschicht zwischen dem Polymerkörper und der Probenflüssigkeit sofort einsatzfähig ist. Die Quellrate liegt infolge des Vernetzungsgrads und des mitgegebenen Salz-Wasser-Gemisches vorzugsweise bei weniger als 5 - 20%. Der durch diffusive Prozesse verursachte Salzstrom vom Innenelektrolyten zur Probe ist stark minimiert, was die lange Potentialstabilität gewährleistet, und liegt in der Größenordnung des für die Potentialmessung benötigten Messstromes.

Als organische Polymere werden im Zusammenhang mit der vorliegenden Erfindung Makromoleküle bezeichnet, welche aus Monomereinheiten aufgebaut sind, die typischerweise zu den organischen Verbindungen gezählt werden. Solche organische Verbindungen sind dadurch gekennzeichnet, dass ihre Hauptstruktur aus Kohlenstoffatomen gebildet wird, wobei sie jedoch auch - meist Heteroatome aufweisende - funktionelle Gruppen enthalten können und die sonstigen freien Valenzen der Kohlenstoffatome mit Wasserstoffatomen abgesättigt sind. Die häufigsten Heteroatome enthaltende funktionellen Gruppen in der organischen Chemie stellen z.B. Alkohle, Ether, Carbonylverbindungen, Amine, Amide, Thiole und Sulfide dar. Im Gegensatz dazu werden in typischen anorganischen Polymeren die Hauptketten vorwiegend durch andere Elemente als Kohlenstoff gebildet. Dies sind z.B. Silizium in Polykieselsäuren, Silikaten und Polysiloxanen, Phosphor in Polyphosphaten, Zinn in Polystannaten, etc.

Die vorteilhafte, erfindungsgemäße Verwendung organischer, hydrophober Präpolymere für die Herstellung des Referenzelektroden-Gels als dreidimensional vernetztes Kompositmaterial ergibt sich u.a. durch die gute Verträglichkeit und Mischbarkeit dieser Polymere mit den eingesetzten organischen hydrophilen Monomeren. Vor allem die erfindungsgemäße Verwendung von hydrophoben, organischen Präpolymeren und hydrophilen, organischen Monomeren gewählt aus chemisch sehr ähnlichen Substanzgruppen ermöglicht eine für die Verarbeitung der Formulierungen und die Anwendung des gebildeten Kompositmaterials gute Verträglichkeit und Mischbarkeit der beiden Polymerphasen untereinander. Dies verhindert einerseits unerwünschte Entmischungseffekte bei der Verarbeitung der Materialformulierungen vor der Vernetzung, als auch die Bildung von makroskopischen Domänen und Phasenseparation der polaren bzw. unpolaren Polymerphasen im fertigen vernetzten Polymerelektrolyten. Die Bildung von nur wenigen großen, unpolaren, hydrophoben Phasen im erfindungsgemäßen Kompositmaterial und deren homogene

Verteilung erfolgt durch die Verwendung makromolekularer, hydrophober, organischer Präpolymere als Einsatzstoffe und nicht durch eine schlechte oder limitierte Mischbarkeit der Einsatzstoffe.

Die Verbindung der aus hydrophoben, organischen Präpolymeren gebildeten, nanoskaligen Hydrophob-Domänen mit dem durch Polymerisation, von vorwiegend hydrophilen, organischen Monomeren gebildeten, dreidimensionalen Netzwerk, zum erfindungsgemäßen Kompositmaterial, kann entweder durch physikalische (Verschlaufungen, interpenetrierende Netzwerke) oder chemische (kovalente Bindungen) Wechselwirkungen erfolgen.

Im Zuge des Vermischens der Elektrolytsalzlösung mit dem organischen Prepolymer-Monomer-Gemisch fällt ein Großteil des Elektrolytsalzes mikrokristallin aus und das restliche Wasser bzw. das noch gelöste Elektrolytsalz ergibt nach dem Aushärten mit dem 3D vernetzten Polymer den Innenelektrolyten, bei dem das eingebettete mikrokristalline Elektrolytsalz gemäß Massenwirkungsgesetz die für das stabile Potential notwendige Ionenkonzentration bedingt.

Da, wie dies einer bevorzugten Ausbildung entspricht, der 3D-vernetzte hydratisierte, organische Polymerkörper ein molekulares Diaphragma für das wenigstens eine Elektrolytsalz zu einem die Referenzelektrode umgebenden Probenraum ausbildet, d.h. als Polymerkörper mit wenige Nanometer großen Hydrophob-Domänen vorliegt, die in einem Netzwerk von hydrophilen Verbrückungselementen eingebettet sind, wird der Ionentransfer an der Grenzschicht zum Probenmedium hin auf das Nötigste reduziert. In dieser Mikrostruktur ist also die Ionendiffusion aus dem Polymerkörper in die Lösung gedrosselt, wobei sich der im Zuge der Diffusion resultierende Salzionenefflux aus dem Innenelektrolytraum im Bereich des Messstromes bewegen soll. Da der Salzübertritt in die zu messende Probenlösung aus besagtem Grund im Vergleich zu einer Elektrolytgrenzschicht, wie sie bei herkömmlichen KCl-Innenelektrolyt-Probenübergängen auftritt, stark gedrosselt ist, reduziert sich der Liquid-Junction-Potentialanteil deutlich.

Die gute Haftung des Polymerkörpers an einem Polymeruntergrund ergibt sich auf Grund einer Hydrophob-Hydrophob-Wechselwirkung zwischen den hydrophoben Prepolymersegmenten und dem Polymeruntergrund.

Eine reduzierte Quellung in wässrigen Medien und eine gute Haftung zu polymeren Randkomponenten ist besonders bei Dickschichtanwendungen für den mechanisch stabilen Verbund zwischen der Innenelektrolytschicht und einem Polymeruntergrund, wie er in der Planarsensorik zur Anwendung kommt, von essentieller Bedeutung.

Gemäß einer bevorzugten Ausführung der Erfindung ist vorgesehen, dass das wenigstens eine Elektrolytsalz von KCl oder NaCl oder einer Mischung von KCl und NaCl gebildet ist und ggf. zusätzlich ein langkettiges, quartäres Ammoniumchlorid, wie z.B. Methyltrioctylammoniumchlorid oder Methyltridodecylammoniumchlorid, umfasst. KCl hat sich hierbei wegen des niedrigen Liquid-Junction-Potentials als besonders vorteilhaft erwiesen. Im Falle einer Mischung aus KCl mit NaCl hat sich bei dem erfindungsgemäßen Herstellungsverfahren gezeigt, dass durch anteiliges Erhöhen des KCl-Anteiles in der zugesetzten Alkalichloridlösung der erfindungsgemäßen Referenzelektrode der Einfluss des Liquid-Junction-Potentials noch weiter reduziert werden kann. Offensichtlich löst sich Kaliumchlorid im hydratisierten hydrophilen Polymermaterial besser als Natriumchlorid. Während sich ersteres im Polymerkörper anreichert und somit den Ionenefflux über das molekulare Diaphragma dominiert, kristallisiert das Natriumchlorid anteilsmäßig stärker aus und bildet somit das Salzreservoir in der Umgebung des Ableitelements, insbesondere des Silber/Silberchlorid-Ableitelements. Als die Chloridkonzentration bestimmenden Bodenkörper kann man auch langkettige quartäre Ammoniumchloride (z.B. Methyltrioctyl- oder Methyltridodecyl-Ammoniumchlorid u.a. langkettige quartäre Ammoniumchloride) verwenden, die man dem Prepolymer-Monomer-Gemisch neben NaCl- bzw. verdünnter KCl-Lösung zusetzt. Da diese quartären Ammoniumsalze für sich nur bedingt wasserlöslich sind, kann eine zeitliche Verlängerung der Potentialstabilität und somit der Referenzelektroden-Einsatzdauer erzielt werden. Die Verwendung quartärer Ammoniumsalze hat lediglich den Nachteil, dass bis zum vollständigen Quellen des polymeren Innenelektrolytraumes Chloridsensitivität besteht, d.h. dass die Referenzelektrode kurz nach deren Einsatz durchwegs als Chloridelektrode fungiert; dieser Effekt schwächt sich im Zuge der Hydratation des Polymerkörpers im Stromschlüsselbereich ab und verschwindet schließlich.

Bevorzugt liegt das wenigstens eine Elektrolytsalz, insbesondere Alkalichlorid, wie z.B. KCl und/oder NaCl, sowohl in mikrokristalliner Form als auch in wässriger Lösung vor. Durch das Zugegensein von fein verteiltem Alkalichlorid und einer Hydrat-Phase, die mit einer gesättigten Alkalichloridlösung im thermodynamischen Gleichgewicht steht, wird für das Elektrodensystem Silber-Silberchlorid ein lediglich von der Temperatur abhängiges stabiles Potential über lange Zeiträume (mehrere Monate) hinweg gewährleistet.

Hinsichtlich des Aufbaus des Polymerkörpers aus organischen hydrophoben Prepolymersegmenten, die mittels organischer hydrophiler Polymerketten vernetzt sind, sieht eine bevorzugte Ausbildung der Erfindung vor, dass die Prepolymersegmente ein Vinylgruppen tragendes, organisches, hydrophobes Prepolymer, insbesondere ein Vinylgruppen tragendes Polymethylmethacrylat-Prepolymer umfassen. Das organische Prepolymer besitzt bevorzugt eine mittlere Molmasse von 1.000 bis 1.000.000 Dalton, insbesondere von 10.000 bis 100.000 Dalton.

Die organischen hydrophilen Polymerketten sind bevorzugt aus hydrophilen Monomeren und ggf. hydrophoben Monomeren gebildet, wobei die hydrophilen Monomere ausgewählt sind aus der Gruppe umfassend hydrophile Ether- und Hydroxylgruppen-tragende (Meth)acrylate, wie z.B. Hydroxyethylmethacrylat (HEMA), Hydroxyethylacrylat, Hydroxypropyl(meth)acrylat, Diethylenglycoldi(meth)acrylat, Polyethylenglycoldi(meth)acrylat (insbesondere mit einer Anzahl der Ethylenoxidsequenzen pro Molekül von 3 bis 10000), Tetrahydrofurfuryl(meth)acrylat, Acryloylmorpholin, Polypropylenglycoldi(meth)acrylate, Polyethylenglycol-mono(meth)acrylate und Glycidyloxypropylmethacrylat, sowie Methacrylsäure, Acrylsäure, Maleinsäureanhydrid, Acrylamide und Methacrylamide. Eine Zusammensetzung eines Referenzelektrodengels dieser Art ist beispielhaft im Folgenden aufgelistet:

| | |
|---|---|
| PMMA/Tetrahydrofurfurylmethacrylat - Copolymer | 38,0 |
| HEMA | 55,8 |
| KCl | 0,9 |
| H₂O | 4,5 |
| 2,2-Dimethoxy-2-phenylacetophenon | 0,8 |

Die hydrophoben Monomere sind bevorzugt ausgewählt aus der Gruppe umfassend Methylmethacrylat, Hexamethyldi(meth)acrylat, Methacrylate, Acrylate der niederen Alkohole, wie z.B. Propanol, Isopropanol, Butanol, Isobutanol, tert. Butanol, Acrylate der Pentanole und Hexanole, Diole und nieder- bis höhermolekularen Fettalkohole.

Sowohl als Klebstoffe als auch als Gießharze einsetzbare (Meth-)Acrylatharze bestehen zum einen aus einer Vinylterminalen (Meth-)acrylat-Prepolymerkomponente, die von sich aus vollkommen unpolar ist, und aus dem Monomer Methylmethacrylat, welches sowohl als Lösemittel als auch als Reaktionskomponente für das Prepolymer fungiert. Durch zumeist radikalische Polymerisation unter Verwendung eines organischen Peroxides bzw. eines Photoinitiators erhält man ein 3D-vernetztes Acrylatharzglas mit hoher Schlagzähigkeit, optimalen optischen Eigenschaften sowie optimaler Lösemittelbeständigkeit.

Eine weitere besonders bevorzugte Klasse organischer hydrophober
Präpolymere stellen Polyester dar, insbesondere ungesättigte Polyester, welche Doppelbindungen in der Hauptkette tragen und in der Lage sind, mit Vinylgruppen zu polymerisieren. Unter ungesättigten Polyestern versteht man Polykondensationsprodukte von organischen Dicarbonsäuren bzw. deren Anhydride mit Diolen, wobei die Dicarbonsäuren zum Teil Doppelbindungen enthalten, also ungesättigt sind und unter geeigneten Bedingungen zur radikalischen Polymerisation mit vinylischen Monomeren geeignet sind. Im Rahmen der vorliegenden Erfindung bevorzugte Beispiele ungesättigter Polyester sind z.B. Polykondensate aus unterschiedlichen Anteilen von Phthal- und Maleinsäuren mit Ethylenglykolen und/oder Propylenglykolen.

Die Maschenweite des vernetzten Polymers kann zum einen durch das Phthalsäure/Maleinsäure-Verhältnis zum anderen durch den Monomerengehalt gesteuert werden. Um eine bessere Flexibilität der unpolaren Prepolymerketten zu erhalten, kann bevorzugt die Phthalsäure durch Terephthalsäure, Isophthalsäure bzw. durch aliphatische Dicarbonsäuren wie Adipin- bzw. Sebazinsäure ersetzt werden. Statt Propylenglycol oder Ethylenglycol kann auch Polypropylenglycol verwendet werden oder für eine bessere Verträglichkeit der Prepolymere mit den hydrophilen Monomeren etwas Polyethylenglycol eingesetzt werden.

Bevorzugt können hydrophile (Meth)acrylate (wie Hydroxyethylmethacrylat) als Lösungsmittel für die hydrophoben Polyester-Präpolymere und gleichzeitig als hydrophile Monomere für die Gelelektrolyt-Bildung eingesetzt werden.

Wie bereits erwähnt, kann man die Quellung und somit auch die Ionenbeweglichkeit im resultierenden Gel über die Monomere aus der Gruppe der Oligoethylenglycol-di(meth)acrylate (im Wesentlichen die Di(meth)acrylate des Di-, Tri und Tetraethylenglycols)oder Polyethylenglycol-di(meth)acrylate steuern.

Weitere erfindungsgemäß bevorzugte hydrophobe, organische Präpolymere sind z.B. Polyvinylchloride und Styrol-Maleinsäureanhydrid-Copolymere. Besonders bevorzugt ist weiters die Funktionalisierung dieser hydrophoben Präpolymere mit polymerisationsfähigen Vinylgruppen, beispielsweise entsprechend den im Folgenden angegebenen Reaktionen.

Als Vinylgruppen-tragende PVC-Präpolymere ist im Rahmen der vorliegenden Erfindung insbesondere Carboxy-PVC bevorzugt, welches mittels Dixyclohexyl-carbodiimid und einem geeigneten Diamin bei Raumtemperatur in THF zu einem Aminogruppen-tragenden PVC-Körper umgewandelt wird. Dieses Amino-PVC wird in weiterer Folge mit Glycidyloxy-propylacrylat umgesetzt, woraus ein Vinylgruppen-tragendes PVC-Prepolymer resultiert.

Weiters sind auf Vinyl-funktionalisierten Styrol-Maleinsäureanhydrid-Copolymer basierende Präpolymere bevorzugt, die analog via Dicyclohexyl-Carbodiimid und einem Diamin sowie in weiterer Folge mit Glycidyloxypropylacrylat zu einem mit vielen Monomeren gut verträglichen Vinylgruppen-tragenden Prepolymer modifizierbar sind.

Tauscht man bei einem derartigen Acrylharz das unpolare Monomer (Methyl-methacrylat) durch hydrophile bis mit Wasser mischbare Monomere, wie z.B. Hydroxymethylmethacrylat (HEMA), Hydroxypropylmethacrylat, Diethylenglycol-di(meth)acrylat, Polyethylenglycoldi(meth)acrylat, Glycidyloxypropylmethacrylat u.a. aus, bekommt man im Zuge der Vernetzungsreaktion auf Basis radikalischer Polymerisation 3D-vernetzte Polymerkörper, die trotz Quellung in wässrigen Systemen optimale Hafteigenschaften an Polymeren aber auch an Glas besitzen. Die Haftung an Glas lässt sich zum einen durch Hinzugeben kleiner Mengen an Aminopropyltriethoxysilan in eine mit hydrophileren Monomeren modifizierte Polyacrylatformulierung bzw. durch Vorbehandlung von Glas mit wässrigen Aminopropyltriethoxysilanlösungen erreichen, wobei in beiden Fällen eine Amino-Funktionalisierung der Glasoberfläche erzeugt wird, an der die Epoxidgruppe des Glycidyloxypropylmethacrylates kovalent bindet.

Die Polymerquellung kann man bevorzugt durch die Wahl der hydrophilen Monomer-Komponenten bzw. der Monomerenmischung und/oder durch das Gewichtsverhältnis der Monomer- zur hydrophoben Prepolymerkomponente einstellen. Insbesondere gelingt die Quellgradeinstellung durch die Auswahl des Gewichtsverhältnisses von hydrophilen Monomeren zu hydrophoben Monomeren. Eine bevorzugte Ausbildung der Erfindung sieht hierbei vor, dass der Polymerkörper einen Gehalt an hydrophoben, organischen Prepolymersegmenten von 15 bis 80 Gew.-%, bevorzugt zwischen 25 bis 70 Gew.-%, aufweist.

Bevorzugt umfasst das Prepolymer-Monomer-Gemisch 60-70 Gew.-% eines vinylgruppentragenden Polymethylmethacrylat-Prepolymers und 30-40 Gew.-% Methylmethacrylat. Man kann hierbei das Methylmethacrylat durch hydrophile (Meth)acrylatester substituieren, in dem man dem Harzsystem eine dem Methylmethacrylat-Gehalt analoge Menge an Hydroxyethylmethacrylat oder anderer Hydrophilmonomere zusetzt und anschließend am Rotavapor bei 80 bis 100°C unter Vakuum (anfänglich Wasserstrahlvakuum, später Ölpumpenvakuum) das Methylmethacrylat abzieht. Das resultierende Produkt ist hochviskos und hat im Kühlschrank eine Lagerstabilität von deutlich mehr als 3 Jahren.

Dieses Produkt kann mit dem Methylmethacrylat-haltigen Ausgangsharz beliebig gemischt werden. Um die Hydrophilie und auch die Quellrate zu erhöhen, kann der Gehalt an hydrophilen Monomeren durch Zusatz derselben angehoben werden.

Im Vergleich zu linearen hydrophilen Polymeren, die durch in situ-Polymerisation eines Monomerencocktails von hydrophilen bis hydrophoben Monomeren erhalten werden können, sind die 3D vernetzten Polymerkörper der Erfindung homogen und zeigen eine deutlich geringere Quellung in Wasser bzw. in wässrigen Elektrolyten. Ein wesentlicher Vorteil der erfindungsgemäßen Polymerisate liegt darin, dass Monomerencocktails, deren Einzelkomponenten eine sehr unterschiedliche Polarität bzw. Hydrophilie aufweisen, im Zuge der Polymerisation zur Bildung mindestens zweier mit einander unverträglicher Polymerphasen neigen, was besonders bezüglich Wasseraufnahme inhomogene Polymerkörper bedingt. Pfropft man hydrophile Polymerverbrückungen auf ein mehrfach vinylfunktionalisiertes hydrophobes Prepolymerknäuel auf, fällt der Effekt der Inhomogenität infolge der Unverträglichkeit weg.

Gemäß einer bevorzugten Ausführungsform der vorliegenden Erfindung enthält der Polymerkörper hydrophile Polymeradditive, insbesondere Polyvinylpyrrolidon (PVP) Polyvinylalkohol (PVA), Polyethylenglycol (PEG), Polyacrylamid, Polyacrylsäure (PAA), und/oder Co-, Pfropf-, und Blockcopolymere von verschiedenen hydrophilen Polymeren, bevorzugt hydrophile Polymeradditive, die mit polymerisationsfähigen Vinylgruppen funktionalisiert sind, wobei die hydrophilen Polymeradditive bevorzugt in einer Menge von 1 - 20 % im Polymerkörper enthalten sind. Solche hydrophilen Polymeradditive dienen der verbesserten Hydratation und der Erhöhung der Quellfähigkeit des Referenzelektrodengels. Bevorzugt können solche hydrophile Polymeradditive auch durch eine Funktionalisierung mit polymerisierbaren Vinylgruppen als hydrophile Präpolymere zusätzlich kovalent in das Referenzelektroden-Gel eingebaut werden. Die Funktionalisierung von reaktiven End- oder Seitengruppen der hydrophilen Polymeren (z.B. -OH, -COOH, -NH-, -NH2, - SH, etc.) kann hierfür durch Umsetzung mit üblichen Reagenzien zur Einführung polymerisierbarer Vinylgruppen (wie z.B. Glycidyl(meth)acrylat, (Meth)Acrylsäureanhydrid, (Meth)Acryloylchlorid, etc.) erfolgen. Eine Zusammensetzung eines Referenzelektrodengels dieser Art ist beispielhaft im Folgenden aufgelistet:

| | |
|---|---|
| PMMA-Harz Präpolymer | 13,8 |
| Hydroxyethylmethacrylat | 75,5 |
| Acrylat-modifiziertes Polyvinylalkohol | 4,5 |
| -polyethylenglycol graft copolymer | |
| KCl | 0,9 |
| H₂O | 4,5 |
| 2,2-Dimethoxy-2-phenylacetophenon | 0,8 |

Zur Vermeidung einer zu starken Schrumpfung des Referenzelektrodengels während UV-induzierter oder thermischer Härtungs- und Vernetzungsreaktionen und der Verbesserung des Hydratationsverhaltens kann die Erfindung bevorzugt dahingehend weitergebildet sein, dass der Polymerkörper niedermolekulare hydrophile Polymeradditive mit geringerer Flüchtigkeit als Wasser enthält, insbesondere Glyzerin, Ethylenglykol, Propylenglykol, Di- bzw. Triethylenglycol, Dimethylsulfoxid, wobei die niedermolekularen hydrophilen Polymeradditive bevorzugt in einer Menge von 1-10 Gew.% im Polymerkörper enthalten sind. Solche Additive sind bevorzugt gewählt aus Glyzerin, Ethylenglykol, Propylenglykol, Di- bzw. Triethylenglycol, Dimethylsulfoxid (DMSO), Dimethylformamid, etc., und stellen Co-Lösungsmittel bzw. niedermolekulare Weichmacher für das hydrophile Polymernetzwerk sowie Hydratationshilfen dar. Der Einsatz dieser erfindungsgemäßen Additive ist vor allem bei Ausführung der Referenzelektrode in Dickschichttechnologien vorteilhaft, da hier ein großer Teil des in der ursprünglichen Formulierung vorhandenen Wassers während der Härtung verdampft. Eine Zusammensetzung eines Referenzelektrodengels dieser Art ist beispielhaft im Folgenden aufgelistet:

| | |
|---|---|
| PMMA-Harz Präpolymer | 13,7 |
| Hydroxyethylmethacrylat | 75,3 |
| pyrogene Kieselsäure | 5,1 |
| NaCl | 1,0 |
| H₂O | 1,8 |
| Glyzerin | 2,3 |
| 2,2-Dimethoxy-2-phenylacetophenon | 0,8 |

Da z.B. im Zuge der UV-induzierten Polymerisation von in Dickschichtverfahren aufgebrachten Gelen das mit dem Natriumchlorid in den Ansatz gebrachte und einen Teil der Quellung bereits vorwegnehmenden Wasser verdunstet, ist es vorteilhaft, dem Ansatz Additive wie Glyzerin, Ethylen- bzw. Propylenglycol zuzusetzen. Ethylenglycole und Glycerin sind deshalb sehr günstig, da sie ähnliche Polaritäten wie Wasser und - bei den üblicherweise vorliegenden Härtungsbedingungen - geringe Flüchtigkeit aufweisen. Zusätzlich kann Ethylenglykol nach der Härtung, bei Lagerung über längere Zeiträume, jedoch zum Teil aus dem gehärteten Verbund verdunsten. Dabei können Kavitäten im Polymernetzwerk geschaffen werden, die bei der Hydratations- und Quell-Phase im Zuge der Kontaktierung der Referenzelektrode mit dem Messmedium vorteilhaft sind.

Durch Zusatz von niedermolekularen Hydrophilsubstanzen, wie z.B. Glyzerin, Diethylen- bis Polyethylenglycol, kann das im Zuge der Polymerisation entstehende Netzwerk aufgeweitet werden, was eine erhöhte Wasseraufnahme zur Folge hat. Polyethylenglycoldi(meth)acrylat bedingt die Einführung großer Vernetzungsbrücken-bildender Segmente mit stark hydrophilem Charakter. Wählt man als Vernetzungsreaktion eine photoinitiierte Polymerisation bei Raumtemperatur, so kann man die Quellung durch Zusatz von wenigen Prozenten Wasser bzw. wässriger Elektrolytlösung vorwegnehmen.

Der Zusatz von funktionellen (Meth)acrylatmonomeren, insbesondere von Aminogruppen- bzw. Tetraalkylammoniumgruppen tragenden Monomeren, kann im Polymerkörper zur Stabilisierung der Chloridkonzentration (Bildung eines weiteren Chloridreservoirs) genutzt werden.

Gemäß einer bevorzugten Ausbildung der Erfindung sind die hydrophilen Polymerketten zusätzlich aus quarternäre Ammoniumgruppen tragenden Monomeren gebildet, insbesondere aus Trialkyl(meth)acryloylalkylammoniumchlorid, insbesondere Triethyl(meth)acryloylethylammoniumchlorid, aus Aminoalkyl(meth)acrylaten, insbesondere Dimethylaminoethyl(meth)acrylat, sowie aus deren Hydrochloriden. Dies bewirkt das Vorhandensein eines zusätzlichen Chloridreservoirs.

Weiters kann bevorzugt vorgesehen sein, dass die hydrophilen Polymerketten zusätzlich aus mehrfach endständig Thiol-modifizierten kettenförmigen Verbindungen variabler Polarität gebildet sind, wie z.B. Polyoxyethylen-dithiole bzw. Polyoxypropylendithiole, die vorzugsweise mit den Vinylgruppen des Prepolymers über eine THIOL-ENE-CLICK-Reaktion photopolymerisieren. Dies ist eine zusätzliche Methode der Schaffung langkettiger hydrophiler Verbrückungssegmente, wie sie auch durch Copolymerisation mit Polyethylenglycoldi(Meth)acrylaten erzielbar ist. Durch diese Vernetzung mit höhermolekularen hydrophilen Brückenbildnern erzielt man eine Grobmaschigkeit im Polymerverbund und somit eine Möglichkeit der Modulierung der Ionenbeweglichkeit im Hydrophilpolymer.

Vorzugsweise enthält der Polymerkörper weiters Methacryloylalkoxysilylverbindungen, wie z.B. Trialkoxysilylalkenyl(meth)acrylate. Dies bewirkt eine kovalente Anbindung des Polymerkörpers an einen silikatischen oder oxidischen Untergrund (z.B. Glasfläche bzw. Glasröhrchenoberfläche). Durch partielle Hydrolyse der Alkoxygruppen der Trialkoxysilyl-tragenden Monomerkomponente an der Oberfläche kommt es in weiterer Folge zur Kondensation mit den Silanol- oder Hydroxylgruppen der oxidischen (z.B. Glas-)Grenzfläche und somit zu einer (Meth)acryloyl-Funktionalisierung der Oberfläche. Diese (Meth)acryloylgruppen vernetzen mit den im Zuge der Polymerisation generierten endständigen Radikalfunktionen der wachsenden Polymerketten.

Besonders bevorzugt ist vorgesehen, dass der Polymerkörper in Dickschichttechnologie, insbesondere in einer Schichtstärke von 10-100µm, auf einem Träger aufgebracht ist. In diesem Zusammenhang ist die Silber/Silberchloridelektrode bevorzugt so angeordnet, dass sie vom Polymerkörper über eine längere Strecke bedeckt ist und die Polymerkörperschicht mit einer Schichtstärke von etwa 10 bis 50µm zur referenzseitigen Probenöffnung hin einen Stromschlüssel bildet, wobei das Verhältnis Stromschlüsselvolumen zu Probenöffnungsfläche bei 100 bis 500, bevorzugt bei 200 liegt. Dadurch ist gewährleistet, dass sich über längere Zeit hinweg zwischen probenseitiger Mündungsöffnung des Polymerkörpers und des Ag/AgCl-Ableitelements ein konstanter Salzkonzentrationsgradient ergibt, der zum einen vom NaCl-Überschuss im Polymerkörper über dem Silber/Silberchlorid-Ableitelement und zum anderen von der mittleren Elektrolytkonzentration der Probenmedien getragen wird.

Um das Aufbringen der Polymerkörperschicht mittels Siebdruck zu begünstigen, ist bevorzugt vorgesehen, dass der Polymerkörper anorganische Füllstoffe, wie z.B. Silikate oder inerte Oxide enthält, wobei die Füllstoffe vorzugsweise in einer Menge von 30-70 Gew.-% im Polymerkörper enthalten sind.

Alternativ kann der Polymerkörper samt Ableitelement in einer röhrchenförmigen Hohlform angeordnet sein, die eine Öffnung aufweist, wobei das Polymer gegen eine Probe hin ein 0,1 bis 10 mm², vorzugsweise 0,5 bis 5 mm² großes Fenster bildet.

Beim Einsatz von hydrophoben Polymerphasen, mikro/nanoporösen Polymermembranen sowie engmaschig vernetzten hydrophil-hydrophoben Nanokompositen als Diaphragmen für den Probenkontakt können am Übergang vom Diaphragma zum Probenmedium unerwünschte, von der Ionenzusammensetzung der Probelösung abhängige Potentialbildungen auftreten. Solche unspezifischen Ionenselektivitäten widersprechen der Forderung eines probenunabhängigen Referenzpotentials der Referenzelektrode und beeinträchtigen daher präzise potentiometrische Messungen. Mögliche Ursachen für diese zusätzlichen von der Ionenzusammensetzung abhängigen Potentiale sind z.B. die Bildung von elektrochemischen Doppelschichtpotentialen an hydrophoben Polymergrenzflächen bzw. eine selektive Behinderung des freien Ionenaustauschs durch nanoporöse Strukturen, elektrische Oberflächenladungen bzw. die sogenannten Donnan-Potentiale. Eine Verringerung dieser unerwünschten Potentialbildung kann durch die Gestaltung des sog. Diaphragma- oder Stromschlüsselbereichs in Form eines sehr hydrophilen, weitmaschigen Polymergels erfolgen. Die Erfindung ist daher bevorzugt dahingehend weitergebildet, dass der Polymerkörper im Bereich des Diaphragmas aus einem Polymerelektrolytgel mit erhöhter Hydrophilie ausgebildet ist. Dadurch werden eine selektive Interaktion mit einer Ionensorte und die daraus folgende Einschränkung der Beweglichkeit weitgehend vermieden. Gleichzeitig wird aber durch die gelartige Struktur der durch Diffusion bedingte Gesamtionenfluss entsprechend gering gehalten. Während im die Silber/Silberchlorid Elektrode umgebenden Hauptteil des Polymergel-Elektrolyten im Wesentlichen die Chlorid-Ionenkonzentration weitgehend konstant gehalten werden soll, kann der Übergang zum Stromschlüsselbereich so hydrophil gestaltet werden, dass unspezifische, ionenabhängige Störpotentiale minimiert werden. In einer besonders vorteilhaften, erfindungsgemäßen Ausführung erfolgt dies entweder durch Aufbringung einer Beschichtung aus einem deutlich hydrophilen Polymergel auf den Stromschlüsselbereich der Referenzelektroengels (z.B. durch Dispensieren oder drop-coating) oder durch Ausbildung des letzten Segments des Polymergels im Stromschlüsselbereich durch das hydrophilere Polymergel (z.B. mittels Siebdruck). Die Erhöhung der Hydrophilie und Verringerung der Vernetzungsdichte kann bei den erfindungsgemäßen Polymer-Kompositmaterialien z.B. durch eine Erhöhung des Anteils des hydrophilen Monomers (z.B. HEMA) erzielt werden. Weiters können vergleichsweise niedermolekulare, mehrfachfunktionelle Monomere (z.B. Triethylenglykoldiacrylat) zunehmend durch hochmolekulare, hydrophile Makromonomere (z.B. Polyethylenglykoldiacrylat) ersetzt werden. Die Ausbildung des Polymerelektrolytgels mit erhöhter Hydrophilie im Bereich des Diaphragmas bedeutet jedenfalls, dass in diesem Bereich die Hydrophilie im Vergleich zum Rest des Polymerelektrolytgels erhöht ist. Wie bereits erwähnt kann der erfindungsgemäße Polymerkörper mit einem Verfahren hergestellt werden, umfassend die Schritte:
a) Herstellen einer Mischung aus organischen, hydrophoben Prepolymersegmenten sowie organischen, hydrophilen und ggf. hydrophoben Monomeren, um ein Prepolymer-Monomer-Gemisch zu erhalten,
b) Zugeben einer Lösung wenigstens eines Elektrolytsalzes zu dem Prepolymer-Monomer-Gemisch,
c) Vermischen der Elektrolytsalzlösung mit dem Prepolymer-Monomer-Gemisch, wobei das wenigstens eine Elektrolytsalz teilweise mikrokristallin ausfällt und teilweise in der Lösung verbleibt,
d) Polymerisieren der Monomere zu hydrophilen Polymerketten, welche die Prepolymersegmente dreidimensional miteinander vernetzen, wodurch der Polymerkörper erhalten wird, in dem das wenigstens eine Elektrolytsalz eingebettet ist.

Bevorzugt wird in Schritt b) eine Elektrolytsalzlösung mit einer Sättigung von 2-100%, vorzugsweise 10-100% eingesetzt.

Bevorzugt wird die Elektrolytsalzlösung in einer Menge von 5-25 Gew.-%, vorzugsweise 5-10 Gew.-%, bezogen auf das Prepolymer-Monomer-Gemisch zugesetzt.

Weiters ist bevorzugt vorgesehen, dass die Polymerisierung gemäß Schritt d) mittels eines UV-Initiators erfolgt, vorzugsweise ausgewählt aus der Gruppe der Benzoinether oder der substituierten Acetophenone, wie z.B. 2,2-Dimethoxy-2phenyl-acetophenon (Benzildimethylketal).

Um die Aufbringung einer Schicht des Polymerkörpers in der Dickschichttechnologie zu erleichtern, kann in Schritt c) weiters eine Vermischung mit wenigstens einem anorganischen Füllstoff, wie z.B. mit Silikaten oder inerten Oxiden, erfolgen, wobei der wenigstens eine Füllstoff vorzugsweise in einer Menge von 30-70 Gew.-% bezogen auf die Gesamtmenge zugegeben wird. Vorzugsweise wird die in Schritt c) erhaltene Mischung der Elektrolytsalzlösung mit dem Prepolymer-Monomer-Gemisch in Form einer Schicht mittels Siebdruck über ein Ableitelement auf einen Träger aufgebracht und anschließend Schritt d) durchgeführt, um eine Polymerkörperschicht zu erhalten. Weiter wird bevorzugt so vorgegangen, dass auf die Polymerkörperschicht eine Isolierschicht, insbesondere eine UV-aushärtende Isolierlackschicht, aufgebracht wird, wobei die Isolierschicht eine Freistellung aufweist, die als Diaphragma-Fenster fungiert, über welches eine Probe mit der Polymerkörperschicht in Kontakt bringbar ist, wobei das Ableitelement bevorzugt in einem Abstand von > 1mm, vorzugsweise ca. 3 Millimeter von dem Diaphragma-Fenster angeordnet ist.

Gemäß einer bevorzugten Ausführungsform der vorliegenden Erfindung wird der Polymerkörper im Bereich der als Diaphragma-Fenster fungierenden Freistellung aus einem Polymerelektrolytgel mit erhöhter Hydrophilie ausgebildet. Die damit einhergehenden Vorteile wurden oben bereits erläutert.

Üblicherweise werden als dielektrische Isolierschichten für elektrochemischen Sensoren in Dickschichttechnik meist thermisch oder UV-härtenden Epoxidharze oder spezielle (Meth)Acrylatharze wie beispielsweise Lötstopplacke eingesetzt, welche neben guten elektrischen Isolationseigenschaften auch ausgezeichnete Barriereigenschaften gegen Feuchtigkeit, Ionenwanderung und Wasserdampf aufweisen. Im Bereich der erfindungsgemäßen Referenzelektroden ist diese gute Barrierewirkung gegen Wasserdampf u.U. jedoch nachteilig da sie die Hydratations- und Quellungsphase der erfindungsgemäßen Polymergele und damit die Zeit bis zum Vorliegen eines stabilen Referenzpotentials verlängert. Vorteilhaft für eine rasche Einstellung stabiler Referenzpotentiale ist demgegenüber die Verwendung einer für Wasserdampf gut permeablen Deckschicht/Deckmembran mit dennoch guten dielektrischen/isolierenden Eigenschaften. Gemäß einer bevorzugten Ausführungsform der vorliegenden Erfindung ist die Isolierschicht daher aus einem Wasserdampfdurchlässigen Material ausgebildet, bevorzugt ausgewählt aus der Gruppe bestehend aus Silikonen, (Meth)acrylatharzen, insbesondere UV-aushärtenden (Meth)acrylatharzen, bevorzugt enthaltend Fluoralkan und/oder Siloxan-Ketten. Besonders bevorzugt sind hierfür Polymer mit sehr hoher Wasserdampfpermeabilität wie vor allem Fluorpolymere und Silikone (Polysiloxane) z.B. als feuchtigkeitshärtende (oximspaltende) Einkomponentensysteme (z.B. Delogum CR3010) oder als mittels Platinkatalysator vernetzende 2-Komponenten Formulierungen (z.B. Dow-Corning Sylgard 184 oder Wacker Elastosil RT 601). Weiters insbesondere bevorzugt sind in diesem Zusammenhang thermisch oder UV-vernetzende Acrylat- bzw. Methacrylatsysteme mit durch die Vernetzungsdichte und/oder die Wahl der Ausgangszusammensetzung einstellbarer, optimierter Wasserdampfdurchlässigkeit. Die Verwendung von vernetzenden (Meth)acrylat-basierten Deckmembranen erlaubt eine besonders gute Verbindung mit den darunterliegenden Polymergelen. Dies liegt zum Einen an der ähnlichen chemischen Struktur und weiters insbesondere in der Möglichkeit, in den oberflächennahen Bereichen des Polymergels einen gewissen Restgehalt an noch unvernetzten (Meth)acrylatgruppen einzustellen (durch Regelung der Bestrahlungsdosis und oder Sauerstoffinhibierung der Reaktion in Oberflächennähe). Diese restlichen (Meth)acrylat-Gruppen an der Oberfläche des Polymergels können im Zuge der Vernetzung der anschließend aufgebrachten Deckmembran weitervernetzen und zu einer kovalenten Verbindung von Polymergel und Deckmembran führen. Zur Einstellung einer erhöhten Wasserdampfpermeabilität von (Meth)acrylat-basierten Deckemembranen können vor allem Acrylat- oder Methacrylatharze welche Fluoralkylketten bzw. Siloxanketten enthalten eingesetzt werden. Beispiele für Fluoroalkyl funktionelle Acrylharze sind z.b. Perfluoroalkyl-(meth)acrylate enthaltenden Polymerisate, oder PTFE-urethan(meth)acrylate wie die Materialklassen Solvay Fluorolink AD 1700 und MD 700. Beispiele für Siloxan-Ketten enthaltende Acrylharze wären z.B. BYK UV-3500 oder BYK UV-3570 als polyethermodifizierte bzw. polyestermodifizierte, acrylfunktionelle Polydimethylsiloxane oder Ebecryl 1360 bzw. Ebecryl 350 als Siliconacrylate.

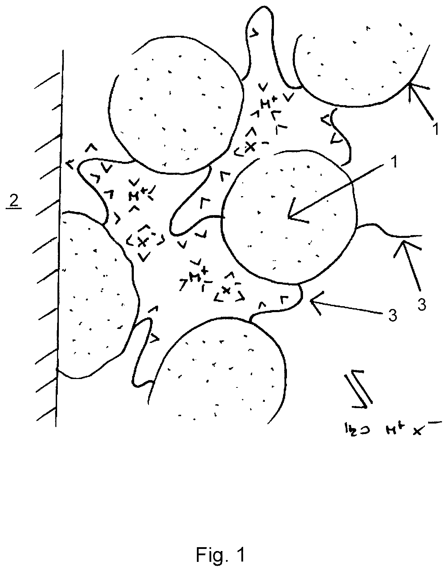

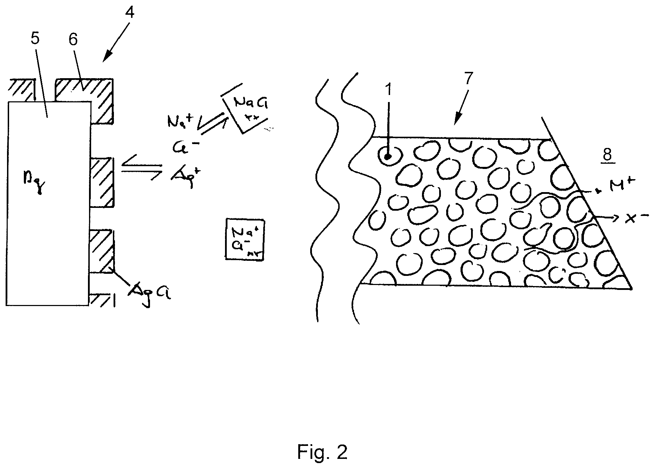

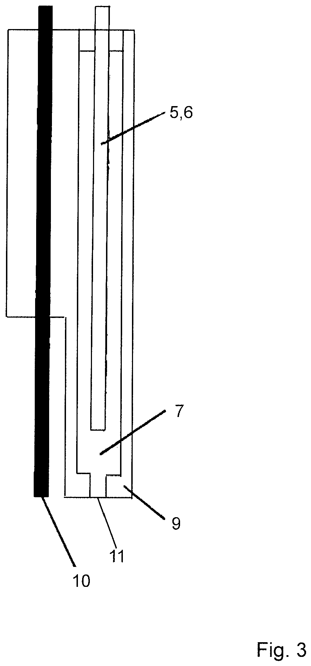

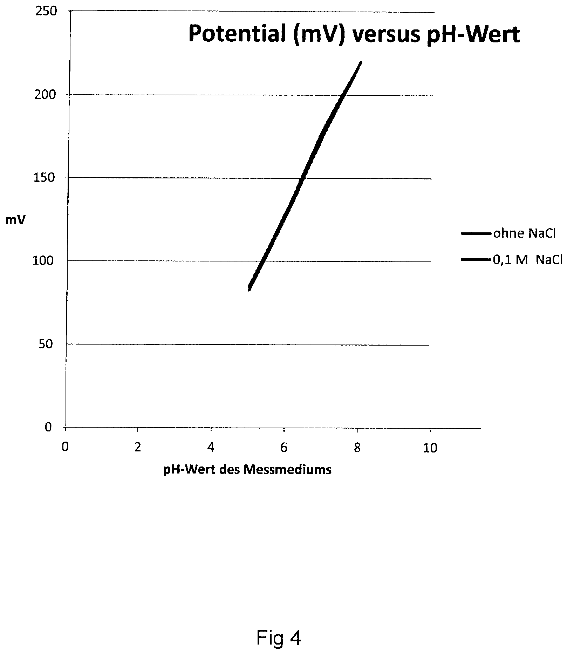

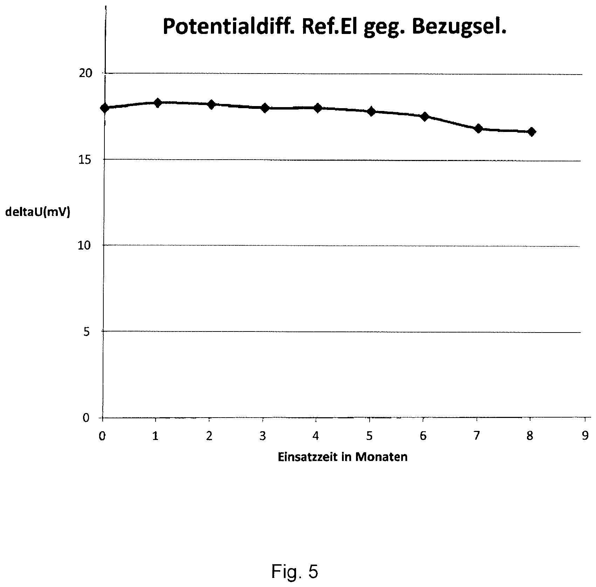

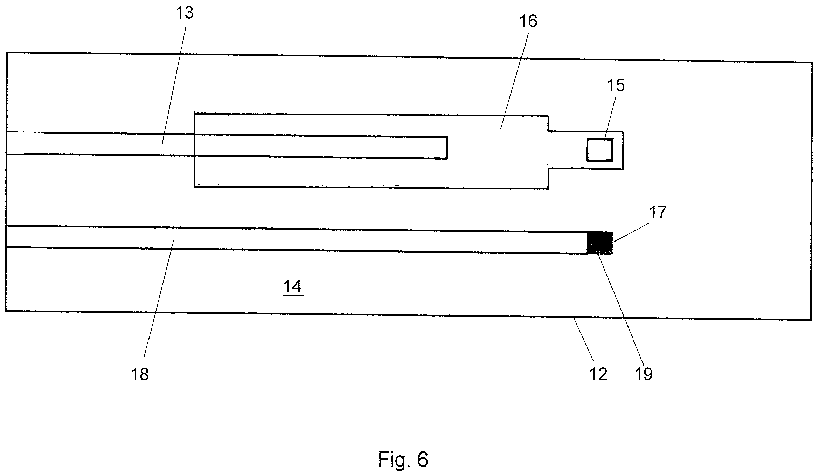

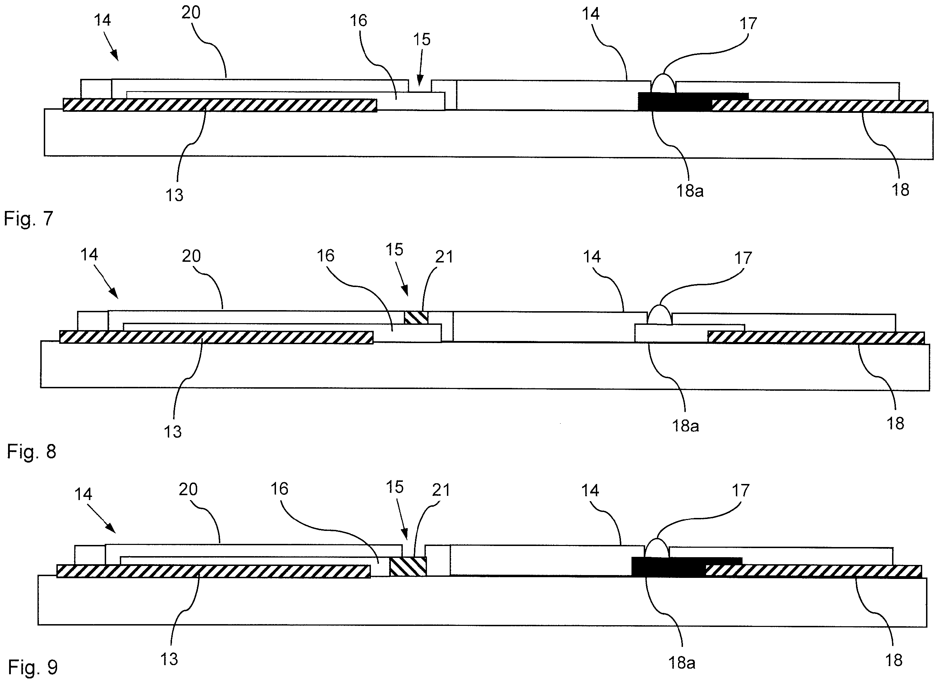

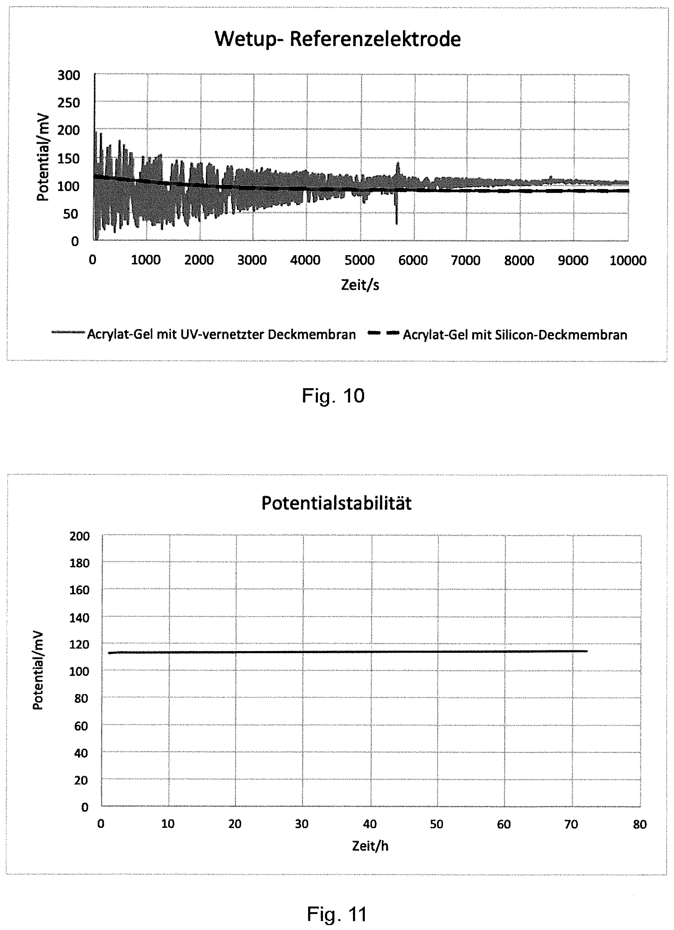

Die Erfindung wird nachfolgend anhand von in der Zeichnung dargestellten Ausführungsbeispielen näher erläutert. In dieser zeigen Fig. 1 eine vergrößerte schematische Darstellung eines Polymerkörpers der erfindungsgemäßen Referenzelektrode, Fig. 2 eine schematische Darstellung der Prozesse in der erfindungsgemäßen Referenzelektrode im Bereich des Ableitelements und im Probenkontaktbereich, Fig. 3 eine pH-Stabelektrode mit erfindungsgemäßer Referenzelektrodenanordnung, Fig. 4 den Potentialverlauf einer pH-Elektrode mit erfindungsgemäßer Referenzelektrode über die Zeit, Fig. 5 den Verlauf der Potentialdifferenz bei einer Anordnung gemäß Fig. 3 über die Zeit unter Verwendung einer Ag/AgCl-Referenzelektrode mit 1M KCl Elektrolyt, Fig. 6 eine schematische Darstellung eines Dickschicht-Sensors mit ISE-Membranspot und erfindungsgemäßer Referenzelektrode und die Figuren 7 bis 9 Schnittdarstellungen erfindungsgemäßer Referenzelektrodenanordnungen. Die Figuren 10 und 11 sind Diagramme zum Beispielen 7.

In Fig. 1 ist der erfindungsgemäße Polymerkörper gezeigt. Die unpolaren, hydrophoben Prepolymersegmente 1 in der Form von Knäueln sind als Kreise gekennzeichnet. Die Prepolymersegmente haften an unpolaren bzw. schwach polaren Oberflächen 2 mittels einer Hydrophob-Hydrophob-Wechselwirkung. Die Prepolymersegmente 1 sind über Ketten und Netzwerke bildende hydrophile Polymersequenzen 3 untereinander vernetzt. Zwischen diesen befinden sich Hydratwasser, freies Wasser sowie die Ionen der Alkalichloride des Elektrolytsalzes, wobei "M(+)" Salzkationen, "X(-)" Salzanionen und ">" Wassermoleküle bezeichnet.

In Fig. 2 wird im linken Teil schematisch die Funktionsweise der Alkalimetallchloridkristalle in Oberflächennähe des Silber/Silberchlorid-Ableitelements gezeigt. Das Ableitelement 4 besteht aus einem Silberkern 5, welcher mit einem Silberchlorid-Überzug 6 versehen ist. So bedingt das Umgebungsmilieu der Salzkristalle eine definierte Chloridaktivität an dem Ableitelement 4 und somit auch das resultierende konstante Silber/Silber(I)-Potential. Im rechten Teil der Fig. 2 ist der Übergang zwischen dem Polymerkörper 7 und der Probenflüssigkeit 8 mit den auf die Salzionendiffusion drosselnd wirkenden hydrophoben Prepolymerdomänen 1 gezeigt.

Nachfolgend wird die Erfindung weiters anhand von Ausführungsbeispielen zur Herstellung der Referenzelektrode dargestellt.

### BEISPIEL 1:

Dieses Beispiel betrifft einen pH-Sensor in einer Zweistabmesskette in Kombination mit einer Ag/AgCl-Referenzelektrode, deren zylindrischer Polymerkörper in einem Glasröhrchen angeordnet ist.

Herstellung des Polymerkörpers:
10 Gewichtsteile Acrylatharz mit 35 Gew.-% Hydroxymethylacrylatgehalt wurden mit 2,5 Gewichtsteilen Hydroxyethylmethacrylat gemischt und mit 7 Gew.-% gesättigter Natriumchloridlösung unter Rühren versetzt. Die auftretende Trübung ist durch die NaCl-Fällung in der Mischung verursacht. Abschließend wurden 0,2 Gewichtsteile des Photoinitiators 2,2-dimethoxy-2-acetophenon zugesetzt. Die Mischung hatte nach der Herstellung die folgende Zusammensetzung:

| | |
|---|---|
| PMMA-Harz Präpolymer | 47,8 |
| Hydroxyethylmethacrylat | 44,2 |
| NaCl | 2,4 |
| H₂O | 4,1 |
| 2,2-Dimethoxy-2-phenylacetophenon | 1,5 |

Diese Mischung wurde in ein gegen den Probenraum hin verjüngtes Glasröhrchen 9 (Fig. 3 - Länge: 3 cm, Durchmesser: 3 mm, Durchmesser bei der Verjüngung: 2 mm) gefüllt, wobei die verjüngte Öffnung 11 mit einer Parafilm-Folie (eine dehnbare, weißlich durchscheinende Verschlussfolie, aus etwa 50:50 Paraffin-Wachs und Polyolefin) verschlossen wurde, um das Ausfließen der Mischung zu verhindern. Nach Platzieren eines als Ableitelement 5 dienenden, elektrochemisch einseitig chlorierten Silberstabes im Mittelteil des Röhrchens 9 (der Abstand des unteren Endes des chlorierten Silberstabes 5 zur probenseitigen Öffnung betrug ca. 0,5-0,7 cm), wurde der Röhrcheninhalt im LW-UV-Licht gehärtet (LW-UV, 2000 Watt, 60 sec).

Die so erhaltene Referenzelektrode wurde gegen die Ableitung hin verschlossen und zu einer pH-Glaselektrode 10 gebunden. Nach Quellen in einem pH7-Sörensenpuffer mit 0,1 mol/L NaCl-Hintergrund, d.h. nach erfolgter Quellung und Stabilisierung des Referenzelektrodenpotentials, wurden nachstehende Untersuchungen in einem Zeitraum von 12 Monaten durchgeführt.

Messanordnungen:
A.) pH-Funktionsgraphen in Abhängigkeit vom NaCl-Gehalt aufgesalzter Sörensenpuffer (Basis = m/15 prim/sec. Phosphat) Messwerte gegen die mit einer Einstabmesskette von WTW ermittelten pH-Werte der Prüflösungen. Die vom Salzgehalt beeinflusste Verschiebung der pH-Messfunktionen gibt Auskunft über das im Vergleich zur Einstabmesskette resultierende Vermischungspotential.
B.) Messung der Referenzpotentiallage gegen eine via Stromschlüssel abgetrennte Silber-Silberchlorid-Referenzelektrode mit einem 1,0 molaren KCl-Innenelektrolyt. Verfolgung der Potentialdifferenz zwischen den beiden Elektroden über einen Zeitraum von 7 Monaten.

Ergebnisse:
Die Untersuchungen haben gezeigt, dass sich bei Aufsalzen des 1/15 mol/L Sörensenpuffers die pH-Kurve im Bereich zwischen pH5 und ph6 um maximal 0,02 pH-Einheiten, zwischen pH6 und pH7 um maximal 0,06 und bei pH8 um +/-0,0 pH-Einheiten nach höheren pH-Werten verschiebt (siehe Fig. 4, welche den Potentialverlauf einer pH-Elektrode mit erfindungsgemäßer Referenzelektrode in zwei Messmedien zeigt: Sörensenpuffer (m/15 prim/sec.P) einmal ohne und einmal plus 0,1M NaCl). Fig. 4 gibt folgende Werte wieder:

| pH | ohne NaCl [mV] | 0,1M NaCl [mV] |
|---|---|---|
| 5 | 85 | 83 |
| 6 | 130 | 128 |
| 7 | 180 | 177 |
| 8 | 220 | 220 |

Die Langzeitmessungen haben gezeigt, dass sich die anfängliche Potentialdifferenz zwischen erfindungsgemäßer Referenzelektrode in vorangestellt definierter Formulierung und einer externen Referenzelektroden mit 1 molarer KCl-Lösung als Innenelektrolyt von 18,0 +/- 0,3 mV auf 17,5 +/-0,3 mV nach 6 monatigem Einsatz und auf 16,5 +/- 0,3 mV nach knapp 8 Monaten verändert hat (s. Fig. 5). Nach einem Jahr Laufzeit reduziert sich die Potentialdifferenz auf 14-15 mV.

BEISPIEL 2:
Dieses Beispiel betrifft einen pH-Dickschichtsensor samt Referenzelektrodensystem in Dickschichtausführung.

Aufbau:
Als Basissensor fungierte referenzelektrodenseitig eine etwa 1 Millimeter breite und mehrere Zentimeter lange, auf einem Polymerträger 12 siebgedruckte Silber-Silberchlorid-Bahn 13. Auf diese wurde gemäß Fig. 6 eine die Silber-Silberchlorid-Bahn auf etwa 2-3 Zentimeter überdeckende erfindungsgemäße 3D vernetzbare Prepolymeren-Hydrophilmonomeren-Salz-Formulierung 16 mit nachfolgender Zusammensetzung aufgebracht.

Formulierung: 10 Gewichtsteile Acrylat-Prepolymer-HEMA-Mischung (7:3) wurden mit weiteren 10 Gewichtsteilen HEMA und 10 Gewichtsteilen eines mikrokristallinen Alumosilikates, 1 Teil gesättigter Natriumchloridlösung und 0,4 Teilen analogem Photoinitiator gemischt.

Die Mischung hatte nach der Herstellung die folgende Zusammensetzung:

| | |
|---|---|
| PMMA-Harz Präpolymer | 16,1 |
| Hydroxyethylmethacrylat | 30,0 |
| Alumosilikat | 30,0 |
| NaCl | 8,3 |
| H₂O | 14,7 |
| 2,2-Dimethoxy-2-phenylacetophenon | 0,9 |

Nach Auftrag der Formulierung 16 (Fig. 6) wurde im LW-UV bei 1000 Watt Lampenleistung gehärtet und dieser Schichtverbund ebenfalls mit einem unter UV-Licht aushärtenden Isolierlacksystem 14 überdruckt, wobei die Struktur der Isolierlackschicht 14 so gewählt war, dass ein etwa 1×1 mm großes Fenster 15 bzw. Diaphragma 15 auf der Referenzelektroden-Zwischenschicht so positioniert war, dass ein Abstand zur Silber-Silberchlorid-Bahn 13 von mehr als 2 Millimetern realisiert war. Die Referenzelektrode ist nach 2-3 stündigem Quellen des entstandenen Polymerkörpers 16 in einem physiologischen Standby-Puffersystem messbereit (siehe Fig. 6). Weiters weist die Isolierlackschicht 14 zumindest für jede ionenselektive Elektrode ein weiteres Fenster 19, angepasst an die Größe und Position der ionenselektiven Sensorschicht 17, auf. Die ionenselektive Elektrode, bestehend aus der ionenselektiven Sensorschicht 17 und dem Ableitelement 18, ist ebenfalls auf dem Polymerträger 12 aufgebracht, und mit Ausnahme des freigestellten Fensters 19 durch die Isolierlackschicht 14 abgedeckt.

Messungen:
Messanordnung: pH-Wertmessung bei Kombination der Dickschicht-Referenzelektrode mit der Dickschicht-pH-Elektrode 17; vermessen wurden Sörensenpuffer (1/15 mol/L Phosphatpuffer) ohne und bei Aufsalzen mit 0,1 bzw. 0,2 mol/Liter Natriumchlorid. Ferner erfolgte eine Überprüfung der Potentialstabilität der Dickschicht-Referenzelektrode über 2 Wochen hinweg.

Ergebnisse:
Die Messungen haben gezeigt, dass sich im pH-Bereich zwischen 6,5 und 8,0 die pH-Funktion bei Aufsalzen mit 0,1 Mol/Liter um 0,02 pH-Einheiten und bei Aufsalzen mit 0,2 mol/Liter NaCl um 0,04-0,05 pH-Einheiten verschiebt.

Das Potential der Referenzelektrode bleibt ab abgeschlossenem Wetup (Quellphase) über mehrere Wochen hinweg stabil bei etwa 15 mV gegenüber einem externen Referenzsystem.

BEISPIEL 3:
Dieses Beispiel betrifft die Synthese eines ungesättigten Polyesters und Formulierung eines entsprechenden Referenzelektroden-Gels.

0,675 mol (100,0 g) Phthalsäureanhydrid, 0,510 mol (50,0g) Maleinsäureanhydrid und 1,24 mol (94,0g) Propylenglycol (Äquivalenzverhältnis Alkohol-OH zu Carboxylgruppen = 1,05) werden unter Rühren und Inertgaszuführung aufgeschmolzen. Die Reaktion wird auf 205-210 °C erhitzt und das gebildete Wasser mit einem Wasserabscheider abgezogen. Rest-Reaktionswasser wird anschließend mittels Toluol als Schleppmittel aus dem Reaktionsgemisch entfernt. Nach Erreichen der gewünschten Säurezahl (kleiner 45, vornehmlich kleiner 30 mg KOH zu Neutralisation von 1g Reaktionsgemisch) wird das Schleppmittel aus dem Ansatz entfernt. Nach Abkühlung auf unter 130°C wird mit 122 g Hydroxyethylmethacrylat unter starkem Rühren verdünnt und möglichst rasch auf unter 40°C abgekühlt. Dieses aus 66 Gew.-% Polyester und 34 Gew-% Hydroxyethylmethacrylat (HEMA) bestehende polymerisationsfähige Gemisch wird je nach gewünschtem Quellverhalten des im gezeigten Fall via UV-Licht generierten Gels mit HEMA, Tetraethylenglycoldiacrylat, Natriumchloridlösung und im Falle einer Dickschichtanwendung zum Zwecke der Siebdruckbarkeit mit einem anorganischen Füllstoff und einem Photoinitiator auf Basis von Benzoinether sowie substituierten Acetophenonen wie zum Beispiel 2,2-Dimethoxy-2-phenyl-acetophenon (0,5 bis 2 Gew.% auf das vorliegende Prepolymer-Monomerengemisch) gemischt.

BEISPIEL 4:
Dieses Beispiel betrifft eine Referenzelektroden-Gelformulierung auf Basis ungesättigter Polyester als hydrophobem Präpolymer und 3D-Vernetzung mit hydrophilen Monomeren
1,5 Teile des eingangs beschriebenen Polyester-HEMA-Gemisches werden mit 0,25 Teilen HEMA sowie 0,25 Teilen Tetraethylenglycoldiacrylat, 0,02 Teilen 2,2-Dimethoxy-2-phenyl-acetophenon und 0,2 Teilen 1 molarer Natriumchloridlösung gemischt und via UV-Licht zur Aushärtung gebracht. Die UV-Härtungsdauer (LW-UV-Licht) beträgt bei 1000 bis 2000 Watt Leistung und unter Anwendung von Inertgas wenige Sekunden bis maximal 2 Minuten. Die Quellrate des durch Polymerisation generierten Polymerkörpers liegt bei etwa 10 bis 15%.

BEISPIEL 5:
Diese Beispiel betrifft eine erfindungsgemäße Referenzelektrode, bei der der Polymerkörper im Bereich des Diaphragmas aus einem Polymerelektrolytgel mit erhöhter Hydrophilie 21 (Figuren 7 und 8) ausgebildet ist, das heißt, bei der der Polymerkörper im Bereich des Diaphragmas 15 aus einem Polymerelektrolytgel mit im Vergleich zum Rest des Polymerkörpers 16 erhöhter Hydrophilie ausgebildet ist. Gleichzeitig ist die Isolierschicht 14 im Bereich der Ableitelektrode 13 bzw. dem Ableitelement 13 aus einem Wasserdampf-durchlässigen Material 20 gebildet. Mit dem Bezugszeichen 18a ist ein Kohlenstoff-Festkontakt bezeichnet.

10 Gewichtsteile PMMA-Prepolymer-HEMA (Herstellung s. oben) werden mit 20 bis 25 Gewichtsteilen Hydroxyethylmethacrylat und 0,3 Gewichtsteilen Photoinitiator gemischt. Aufgebracht wird diese Mischung via Mikrodispensiersystem, gehärtet wird analog zu den bereits definierten Vorgaben.

| | |
|---|---|
| Beispiel Drop-Coating | |
| PMMA Präpolymer | 14,4 |
| Hydroxyethylmethacrylat | 81,9 |
| Tetraethylenglycoldimethacrylat | 3,6 |
| 2,2-Dimethoxy-2-phenylacetophenon | 0,1 |

BEISPIEL 6:
Dieses Beispiel betrifft ein hydrophiles, für den Siebdruck geeignetes Gel auf Acrylatbasis zur Beschichtung des Stromschlüsselbereichs:
10 Gewichtsteile PMMA-Prepolymer-HEMA (Herstellung s. oben) mit 20 Gewichtsteilen Hydroxyethylmethacrylat, 2,5 Gewichtsteilen 1 molarer Natriumchloridlösung und 2,5 Gewichtsteilen pyrogener Kieselsäure sowie 0,3 Gewichtsteilen Photoinitiator 2,2-Dimethoxy-2-phenylacetophenon.

BEISPIEL 7
Beschleunigung der Hydratations- und Quellphase der Referenzelektrode nach Kontakt mit wässrigem Messmedium, bei Verwendung einer silikonbasierten im Vergleich zu einer UV-gehärteten, acrylatbasierten Deckschichte.

Bei der Verwendung UV-vernetzter Acrylatharze als Deckmembran über der Dickschicht-Referenzelektrode, wird durch die ungenügende Hydratation und Quellung des Polymergels und den dadurch bedingten sehr hohen elektrischen Innenwiderstand, zu Beginn ein instabiles, stark verrauschtes Potential erhalten. Die Signalqualität wird bei diesen Elektroden mit zunehmender Hydratation besser und erreicht oft erst nach "Wet-up Perioden" von bis zu 3h eine für potentiometrische Sensoren akzeptable Signalstabilität. Dagegen zeigen Dickschicht-Referenzelektroden unter Verwendung von hoch wasserdampfpermeablen Silikonmembranen über dem Polymergel, bereits unmittelbar nach der Kontaktierung mit wässrigem Probenmedium glatte, rauscharme Signalverläufe. Dieser Zusammenhang ist in Figur 10 dargestellt. Nach erfolgter Hydratation und Quellung zeigen diese Referenzelektroden mit gut wasserdampfdurchlässigen Deckmembranen ebenso ein sehr gutes Potentialverhalten hinsichtlich der Langzeitstabilität. Typische Werte für die Potentialdrift liegen hier z.B. bei < 1,5 mV über 70 h (siehe Fig. 11)

## Patentansprüche

1. Referenzelektrode zur potentiometrischen Messung von Ionenkonzentrationen, umfassend einen mit wenigstens einem Elektrolytsalz gefüllten quellfähigen Polymerkörper (7) und ein sich im Polymerkörper befindliches Ableitelement zweiter Art (4), vorzugsweise vom Typ Ag/AgCl, **dadurch gekennzeichnet, dass** der Polymerkörper aus organischen, hydrophoben Prepolymersegmenten (1) aufgebaut ist, die durch organische, hydrophile Polymerketten (3) miteinander dreidimensional vernetzt sind.

2. Referenzelektrode nach Anspruch 1, **dadurch gekennzeichnet, dass** der Polymerkörper ein Diaphragma für das wenigstens eine Elektrolytsalz zu einem die Referenzelektrode umgebenden Probenraum ausbildet.

3. Referenzelektrode nach Anspruch 1 oder 2, **dadurch gekennzeichnet, dass** das wenigstens eine Elektrolytsalz von KCl oder NaCl oder einer Mischung von KCl und NaCl gebildet ist und ggf. zusätzlich ein langkettiges, quarternäres Ammoniumchlorid, wie z.B. Methyltrioctylammoniumchlorid oder Methyltridodecylammoniumchlorid, umfasst.

4. Referenzelektrode nach Anspruch 1, 2 oder 3, **dadurch gekennzeichnet, dass** das wenigstens eine Elektrolytsalz sowohl in mikrokristalliner Form als auch in wässriger Lösung vorliegt.

5. Referenzelektrode nach einem der Ansprüche 1 bis 4, **dadurch gekennzeichnet, dass** die Prepolymersegmente ein Vinylgruppen tragendes, organisches, hydrophobes Prepolymer, insbesondere ein Vinylgruppen tragendes Polymethylmethacrylat-Prepolymer umfassen.

6. Referenzelektrode nach einem der Ansprüche 1 bis 5, **dadurch gekennzeichnet, dass** die hydrophilen Polymerketten aus hydrophilen Monomeren und ggf. hydrophoben Monomeren gebildet sind, wobei die hydrophilen Monomere ausgewählt sind aus der Gruppe umfassend hydrophile Ether- und Hydroxylgruppen-tragende (Meth)acrylate, wie z.B. Hydroxyethylmethacrylat (HEMA), Hydroxyethylacrylat, Hydroxypropyl(meth)acrylat, Diethylenglycoldi (meth)acrylat, Polyethylenglycoldi(meth)acrylat (insbesondere mit einer Anzahl der Ethylenoxidsequenzen pro Molekül von 3 bis 10000), Tetrahydrofurfuryl(meth)acrylat, Acryloylmorpholin, Polypropylenglycoldi(meth)acrylate, Polyethylenglycol-mono(meth)acrylate und Glycidyloxypropylmethacrylat, sowie Methacrylsäure, Acrylsäure, Maleinsäureanhydrid, Acrylamide und Methacrylamide.

7. Referenzelektrode nach Anspruch 6, **dadurch gekennzeichnet, dass** die hydrophoben Monomere ausgewählt sind aus der Gruppe umfassend Methylmethacrylat, Hexamethyldi(meth)acrylat, Methacrylate, Acrylate der niederen Alkohole, wie z.B. Propanol, Isopropanol, Butanol, Isobutanol, tert. Butanol, Acrylate der Pentanole und Hexanole, Diole und nieder- bis höhermolekularen Fettalkohole.

8. Referenzelektrode nach einem der Ansprüche 1 bis 7, **dadurch gekennzeichnet, dass** der Polymerkörper einen Gehalt an Prepolymersegmenten von 15 bis 80 Gew.-%, bevorzugt zwischen 25 bis 70 Gew.-%, aufweist.

9. Referenzelektrode nach einem der Ansprüche 1 bis 8, **dadurch gekennzeichnet, dass** der Polymerkörper hydrophile Polymeradditive, insbesondere Polyvinylpyrrolidon (PVP) Polyvinylalkohol (PVA), Polyethylenglycol (PEG), Polyacrylamid, Polyacrylsäure (PAA), und/oder
Co-, Pfropf-, und Blockcopolymere von verschiedenen hydrophilen Polymeren, enthält, bevorzugt hydrophile Polymeradditive, die mit polymerisationsfähigen Vinylgruppen funktionalisiert sind, wobei die hydrophilen Polymeradditive bevorzugt in einer Menge von 1 - 20 Gew.-% im Polymerkörper enthalten sind.

10. Referenzelektrode nach einem der Ansprüche 1 bis 9, **dadurch gekennzeichnet, dass** der Polymerkörper niedermolekulare hydrophile Polymeradditive mit geringerer Flüchtigkeit als Wasser enthält, insbesondere Glyzerin, Ethylenglykol, Propylenglykol, Di- bzw. Triethylenglycol, Dimethylsulfoxid, wobei die niedermolekularen hydrophilen Polymeradditive bevorzugt in einer Menge von 1-10 Gew.% im Polymerkörper enthalten sind.

11. Referenzelektrode nach einem der Ansprüche 1 bis 10, **dadurch gekennzeichnet, dass**
die hydrophilen Polymerketten zusätzlich aus quarternäre Ammoniumgruppen tragenden Monomeren gebildet sind, insbesondere aus Trialkyl(meth)acryloylalkylammoniumchlorid, insbesondere Triethyl(meth)acryloylethylammoniumchlorid, aus Aminoalkyl(meth)acrylaten, insbesondere Dimethylaminoethyl(meth)acrylat, sowie aus deren Hydrochloriden.

12. Referenzelektrode nach einem der Ansprüche 1 bis 11, **dadurch gekennzeichnet, dass** die hydrophilen Polymerketten zusätzlich aus mehrfach endständig Thiol-modifizierten kettenförmigen Verbindungen variabler Polarität gebildet sind, wie z.B. Polyoxyethylen-dithiole bzw. Polyoxypropylendithiole, die vorzugsweise mit den Vinylgruppen des Prepolymers über eine THIOL-ENE-CLICK-Reaktion photopolymerisieren.

13. Referenzelektrode nach einem der Ansprüche 1 bis 12, **dadurch gekennzeichnet, dass** der Polymerkörper in Dickschichttechnologie, insbesondere in einer Schichtstärke von 10-100 pm, auf einem Träger aufgebracht ist.

14. Referenzelektrode nach einem der Ansprüche 1 bis 13, **dadurch gekennzeichnet, dass** der Polymerkörper anorganische Füllstoffe, wie z.B. Silikate oder inerte Oxide enthält, wobei die Füllstoffe vorzugsweise in einer Menge von 30-70 Gew.-% im Polymerkörper enthalten sind.

15. Referenzelektrode nach einem der Ansprüche 1 bis 14, **dadurch gekennzeichnet, dass** der Polymerkörper samt Ableitelement in einer röhrchenförmigen Hohlform angeordnet ist, die eine Öffnung aufweist, wobei das Polymer gegen eine Probe hin ein 0,1 bis 10 mm², vorzugsweise 0,5 bis 5 mm² großes Fenster bildet.

16. Referenzelektrode nach einem der Ansprüche 2 bis 15,
**dadurch gekennzeichnet, dass** der Polymerkörper im Bereich des Diaphragmas aus einem Polymerelektrolytgel mit erhöhter Hydrophilie ausgebildet ist.

17. Verfahren zur Herstellung eines Polymerkörpers zur Verwendung für eine Referenzelektrode nach einem der Ansprüche 1 bis 16, umfassend die Schritte:
a) Herstellen einer Mischung aus organischen, hydrophoben Prepolymersegmenten sowie organischen, hydrophilen und ggf. hydrophoben Monomeren, um ein Prepolymer-Monomer-Gemisch zu erhalten,
b) Zugeben einer Lösung wenigstens eines Elektrolytsalzes zu dem Prepolymer-Monomer-Gemisch,
c) Vermischen der Elektrolytsalzlösung mit dem Prepolymer-Monomer-Gemisch, wobei das wenigstens eine Elektrolytsalz teilweise mikrokristallin ausfällt und teilweise in der Lösung verbleibt,
d) Polymerisieren der Monomere zu hydrophilen Polymerketten, welche die Prepolymersegmente dreidimensional miteinander vernetzen, wodurch der Polymerkörper erhalten wird, in dem das wenigstens eine Elektrolytsalz eingebettet ist.

18. Verfahren nach Anspruch 17, **dadurch gekennzeichnet, dass** in Schritt b) eine Elektrolytsalzlösung mit einer Sättigung von 2-100%, vorzugsweise 10-100% eingesetzt wird, wobei die Elektrolytsalzlösung bevorzugt in einer Menge von 5-25 Gew.-%, vorzugsweise 5-10 Gew.-%, bezogen auf das Prepolymer-Monomer-Gemisch zugesetzt wird.

19. Verfahren nach Anspruch 17 oder 18, **dadurch gekennzeichnet, dass** die Polymerisierung gemäß Schritt d) mittels eines UV-Initiators erfolgt, vorzugsweise ausgewählt aus der Gruppe der Benzoinether oder der substituierten Acetophenone, wie z.B. 2,2-Dimethoxy-2phenyl-acetophenon (Benzildimethylketal).

20. Verfahren nach einem der Ansprüche 17 bis 19 **dadurch gekennzeichnet, dass** in Schritt c) weiters eine Vermischung mit wenigstens einem anorganischen Füllstoff, wie z.B. mit Silikaten oder inerten Oxiden, erfolgt, wobei der wenigstens eine Füllstoff vorzugsweise in einer Menge von 30-70 Gew.-% bezogen auf die Gesamtmenge zugegeben wird.

21. Verfahren nach einem der Ansprüche 17 bis 20, **dadurch gekennzeichnet, dass** die in Schritt c) erhaltene Mischung der Elektrolytsalzlösung mit dem Prepolymer-Monomer-Gemisch in Form einer Schicht mittels Siebdruck über ein Ableitelement auf einen Träger aufgebracht wird und anschließend Schritt d) durchgeführt wird, um eine Polymerkörperschicht zu erhalten.

22. Verfahren nach Anspruch 21, **dadurch gekennzeichnet, dass** auf die Polymerkörperschicht eine Isolierschicht, insbesondere eine UV-aushärtende Isolierlackschicht, aufgebracht wird, wobei die Isolierschicht eine Freistellung aufweist, die als Diaphragma-Fenster fungiert, über welches eine Probe mit der Polymerkörperschicht in Kontakt bringbar ist, wobei das Ableitelement bevorzugt in einem Abstand von > 1mm, vorzugsweise ca. 3 Millimeter von dem Diaphragma-Fenster angeordnet ist.

23. Verfahren nach Anspruch 22, **dadurch gekennzeichnet, dass** der Polymerkörper im Bereich der als Diaphragma-Fenster fungierenden Freistellung aus einem Polymerelektrolytgel mit erhöhter Hydrophilie ausgebildet wird.

24. Verfahren nach Anspruch 22 oder 23, **dadurch gekennzeichnet, dass** die Isolierschicht aus einem Wasserdampfdurchlässigen Material ausgebildet ist, bevorzugt ausgewählt aus der Gruppe bestehend aus Silikonen, (Meth)acrylatharzen, insbesondere UV-aushärtenden (Meth)acrylatharzen, bevorzugt enthaltend Fluoralkan und/oder Siloxan-Ketten.

## Claims

1. Reference electrode for potentiometric measurement of ion concentrations, comprising a swellable polymer body (7) filled with at least one electrolyte salt and a potential sensing element of the second type (4), preferably of the Ag/AgCl type, located in the polymer body, **characterized in that** the polymer body is composed of organic, hydrophobic prepolymer segments (1), which are three-dimensionally crosslinked by organic, hydrophilic polymer chains (3).

2. Reference electrode according to claim 1, **characterized in that** the polymer body forms a diaphragm for the at least one electrolyte salt to form a sample space surrounding the reference electrode.

3. Reference electrode according to claim 1 or 2, **characterized in that** the at least one electrolyte salt is formed by KCl or NaCl or a mixture of KCl and NaCl and optionally additionally comprises a long-chain, quaternary ammonium chloride, such as methyltrioctylammonium chloride or methyltridodecylammonium chloride.

4. Reference electrode according to claim 1, 2 or 3, **characterized in that** the at least one electrolyte salt is present both in microcrystalline form and in aqueous solution.

5. Reference electrode according to any one of claims 1 to 4, **characterized in that** the prepolymer segments comprise a vinyl group-bearing, organic, hydrophobic prepolymer, in particular a vinyl group-bearing polymethylmethacrylate prepolymer.

6. Reference electrode according to any one of claims 1 to 5, **characterized in that** the hydrophilic polymer chains are formed from hydrophilic monomers and optionally hydrophobic monomers, the hydrophilic monomers being selected from the group comprising hydrophilic ether and hydroxyl group-bearing (meth)acrylates, such as, for example, hydroxyethyl methacrylate (HEMA), hydroxyethyl acrylate, hydroxypropyl(meth)acrylate, diethylene glycol di(meth)acrylate, polyethylene glycol di(meth)acrylate (in particular with a number of ethylene oxide sequences per molecule from 3 to 10000), tetrahydrofurfuryl (meth)acrylate, acryloylmorpholine, polypropylene glycol di(meth)acrylates, polyethylene glycol mono(meth)acrylates and glycidyloxypropyl methacrylate, as well as methacrylic acid, acrylic acid, maleic acid anhydride, acrylamides and methacrylamides.

7. Reference electrode according to claim 6, **characterized in that** the hydrophobic monomers are selected from the group comprising methyl methacrylate, hexamethyldi(meth)acrylate, methacrylates, acrylates of the lower alcohols, such as propanol, isopropanol, butanol, isobutanol, tert. butanol, acrylates of pentanols and hexanols, diols and low to high molecular weight fatty alcohols.

8. Reference electrode according to any one of claims 1 to 7, **characterized in that** the polymer body has a content of hydrophobic, organic prepolymer segments of 15 to 80% by weight, preferably between 25 to 70% by weight.

9. Reference electrode according to any one of claims 1 to 8, **characterized in that** the polymer body contains hydrophilic polymer additives, in particular polyvinyl pyrrolidone (PVP), polyvinyl alcohol (PVA), polyethylene glycol (PEG), polyacrylamide, polyacrylic acid (PAA), and/or co-, graft-, and block copolymers of various hydrophilic polymers, preferably hydrophilic polymer additives which are functionalized with polymerizable vinyl groups, the hydrophilic polymer additives preferably being present in the polymer body in an amount of 1-20% by weight.

10. Reference electrode according to any one of claims 1 to 9, **characterized in that** the polymer body contains low molecular weight hydrophilic polymer additives with lower volatility than water, in particular glycerin, ethylene glycol, propylene glycol, di- or triethylene glycol, dimethyl sulfoxide, the low molecular weight hydrophilic polymer additives preferably being present in the polymer body in an amount of 1-10 % by weight.

11. Reference electrode according to any one of claims 1 to 10, **characterized in that** the hydrophilic polymer chains are additionally formed from monomers bearing quaternary ammonium groups, in particular from trialkyl(meth)acryloylalkylammonium chloride, in particular triethyl(meth)acryloylethylammonium chloride, from aminoalkyl(meth)acrylates, in particular dimethylaminoethyl(meth)acrylate, and from their hydrochlorides.

12. Reference electrode according to any one of claims 1 to 11, **characterized in that** the hydrophilic polymer chains are additionally formed from multi-terminally thiol-modified chain-shaped compounds of variable polarity, such as polyoxyethylene dithiols or polyoxypropylene dithiols, which preferably photopolymerize with the vinyl groups of the prepolymer via a THIOL-ENE-CLICK reaction.

13. Reference electrode according to any one of claims 1 to 12, **characterized in that** the polymer body is applied to a carrier in thick-film technology, in particular in a layer thickness of 10-100 pm.

14. Reference electrode according to any one of claims 1 to 13, **characterized in that** the polymer body contains inorganic fillers, such as silicates or inert oxides, the fillers preferably being present in the polymer body in an amount of 30-70 % by weight.

15. Reference electrode according to any one of claims 1 to 14, **characterized in that** the polymer body together with the potential sensing element is arranged in a tubular hollow mould which has an opening, wherein the polymer forms a window being sized 0.1 to 10 mm², preferably 0.5 to 5 mm², towards a sample.

16. Reference electrode according to any one of claims 2 to 15, **characterized in that** the polymer body, in the region of the diaphragm, is formed from a polymer electrolyte gel with increased hydrophilicity.

17. A method for producing a polymer body for use for a reference electrode according to any one of claims 1 to 16, comprising the steps:
a) producing a mixture of organic, hydrophobic prepolymer segments and organic, hydrophilic and optionally hydrophobic monomers in order to obtain a prepolymer-monomer mixture,
b) adding a solution of at least one electrolyte salt to the prepolymer-monomer mixture,
c) mixing the electrolyte salt solution with the prepolymer-monomer mixture, wherein the at least one electrolyte salt partly precipitates in microcrystalline form and partly remains in the solution,
d) polymerizing the monomers to give hydrophilic polymer chains which cross-link the prepolymer segments three-dimensionally, thereby obtaining the polymer body in which the at least one electrolyte salt is embedded.

18. The method according to claim 17, **characterized in that** an electrolyte salt solution with a saturation of 2-100%, preferably 10-100%, is used in step b), wherein the electrolyte salt solution is added in an amount of 5-25 wt.-%, preferably 5-10 wt.-%, based on the prepolymer-monomer mixture.

19. The method according to claim 17 or 18, **characterized in that** the polymerization according to step d) takes place by means of a UV initiator, preferably selected from the group of benzoin ethers or substituted acetophenones, such as 2,2-dimethoxy-2phenyl-acetophenone (benzyl dimethyl ketal).

20. The method according to any one of claims 17 to 19, **characterized in that** in step c) further mixing with at least one inorganic filler, such as with silicates or inert oxides, takes place, wherein the at least one filler is preferably present in an amount of 30-70 % by weight based on the total amount.

21. The method according to any one of claims 17 to 20, **characterized in that** said mixture of the electrolyte salt solution with the prepolymer-monomer mixture obtained in step c) is applied to a carrier in the form of a layer by means of screen printing over a potential sensing element and then step d) is performed to obtain a polymer body layer.

22. The method according to claim 21, **characterized in that** an insulating layer, in particular a UV-curing insulating lacquer layer, is applied to the polymer body layer, wherein the insulating layer comprises a clearance that functions as a diaphragm window, via which a sample can contact the polymer body layer, wherein the potential sensing element is preferably arranged at a distance of > 1 mm, preferably about 3 millimeters from the diaphragm window.

23. The method according to claim 22, **characterized in that** the polymer body, in the region of the clearance functioning as a diaphragm window, is formed from a polymer electrolyte gel with increased hydrophilicity.

24. The method according to claim 22 or 23, **characterized in that** the insulating layer is formed from a water vapor-permeable material, preferably selected from the group consisting of silicones, (meth)acrylate resins, in particular UV-curing (meth)acrylate resins, preferably containing fluoroalkane and/or siloxane chains.

## Revendications

1. Électrode de référence pour la mesure potentiométrique de concentrations ioniques, comprenant un corps polymère gonflable (7) rempli d'au moins un sel d'électrolyte et un élément de décharge du deuxième type (4), de préférence du type Ag/AgCI, situé dans le corps polymère, **caractérisée en ce que** le corps polymère est constitué de segments de prépolymère organiques hydrophobes (1), qui sont réticulés entre eux de manière tridimensionnelle au moyen de chaînes polymères hydrophiles (3).

2. Électrode de référence selon la revendication 1, **caractérisée en ce que** le corps polymère forme un diaphragme pour l'au moins un sel d'électrolyte dans un espace d'échantillon entourant l'électrode de référence.

3. Électrode de référence selon la revendication 1 ou 2, **caractérisée en ce que** l'au moins un sel d'électrolyte est formé de KCl ou de NaCl ou d'un mélange de KCl et de NaCl, et, éventuellement, comprend en outre un chlorure d'ammonium quaternaire à longue chaîne, tel que par exemple le chlorure de méthyltrioctylammonium ou le chlorure de méthyltrido-décylammonium.

4. Électrode de référence selon la revendication 1, 2 ou 3, **caractérisée en ce que** l'au moins un sel d'électrolyte est présent à la fois sous forme microcristalline et en solution aqueuse.

5. Électrode de référence selon l'une des revendications 1 à 4, **caractérisée en ce que** les segments de prépolymère comprennent un prépolymère organique hydrophobe portant des groupements vinyle, en particulier un prépolymère de polyméthacrylate de méthyle portant des groupements vinyle.

6. Électrode de référence selon l'une des revendications 1 à 5, **caractérisée en ce que** les chaînes polymères hydrophiles sont formées de monomères hydrophiles et éventuellement de monomères hydrophobes, les monomères hydrophiles étant choisis dans le groupe comprenant les (méth)acrylates hydrophiles portant des groupements éther et hydroxyle, tels que par exemple le méthacrylate d'hydroxyéthyle (HEMA), l'acrylate d'hydroxyéthyle, le (méth)acrylate d'hydroxypropyle, le di(méth)acrylate de diéthylène glycol, le di(méth)acrylate de polyéthylène glycol (en particulier avec un nombre de séquences d'oxyde d'éthylène par molécule de 3 à 10000), le (méth)acrylate de tétrahydrofurfuryle, l'acryloyl morpholine, les di(méth)acrylates de polypropylène glycol, les mono(méth)acrylates de polyéthylène glycol et le méthacrylate de glycidyl oxypropyl, ainsi que l'acide méthacrylique, l'acide acrylique, l'anhydride maléique, les acrylamides et les métha-crylamides.

7. Électrode de référence selon la revendication 6, **caractérisée en ce que** les monomères hydrophobes sont choisis dans le groupe comprenant le méthacrylate de méthyle, le di(méth)acrylate d'hexaméthyl, les méthacrylates, les acrylates des alcools inférieurs, tels que par exemple le propanol, l'isopropanol, le butanol, l'isobutanol, le *tert*-butanol, les acrylates de pentanols et d'hexanols, les diols et les alcools gras de bas à haut poids moléculaire.

8. Électrode de référence selon l'une des revendications 1 à 7, **caractérisée en ce que** le corps polymère a une teneur en segments de prépolymère de 15 à 80 % en poids, de préférence entre 25 à 70 % en poids.

9. Électrode de référence selon l'une des revendications 1 à 8, **caractérisée en ce que** le corps polymère comprend des additifs polymères hydrophiles, en particulier de la polyvinyl pyrrolidone (PVP), de l'alcool polyvinylique (PVA), du polyéthylène glycol (PEG), du polyacrylamide, de l'acide polyacrylique (PAA), et/ou des copolymères, des polymères greffés et des copolymères à blocs de divers polymères hydrophiles, de préférence des additifs polymères hydrophiles, qui sont fonctionnalisés avec des groupes vinyle polymérisables, les additifs polymères hydrophiles étant de préférence contenus dans le corps polymère en une quantité de 1 - 20 % en poids.

10. Électrode de référence selon l'une des revendications 1 à 9, **caractérisée en ce que** le corps polymère contient des additifs polymères hydrophiles à bas poids moléculaire et moins volatils que l'eau, en particulier de la glycérine, de l'éthylène glycol, du propylène glycol, du di- ou triéthylène glycol, du diméthylsulfoxyde, dans lequel les additifs polymères hydrophiles à bas poids moléculaire sont de préférence contenus dans le corps polymère en une quantité de 1-10 % en poids.

11. Électrode de référence selon l'une des revendications 1 à 10, **caractérisée en ce que** les chaînes polymères hydrophiles sont en outre formées de monomères porteurs de groupements ammonium quaternaire, en particulier de chlorure de trialkyl(méth)acryloylalkylammonium, en particulier de chlorure de triéthyl(méth)acryloyléthylammonium, des (méth)acrylates d'aminoalkyl, en particulier le (méth)acrylate de diméthylaminoéthyle, et de leurs chlorhydrates.

12. Électrode de référence selon l'une des revendications 1 à 11, **caractérisée en ce que** les chaînes polymères hydrophiles sont en outre formées de composés de polarité variable de type chaîne à terminaison polymodifiée au thiol, tels que par exemple les polyoxyéthylène dithiols ou les polyoxypropylène dithiols, qui se photopolymérisent de préférence avec les groupements vinyle du prépolymère via une réaction THIOL-ÈNE-CLICK.

13. Électrode de référence selon l'une des revendications 1 à 12, **caractérisée en ce que** le corps polymère est appliqué sur un support en utilisant un technologie à couches épaisses, en particulier une épaisseur de couche de 10-100 µm.

14. Électrode de référence selon l'une des revendications 1 à 13, **caractérisée en ce que** le corps polymère contient des charges minérales, telles que par exemple des silicates ou des oxydes inertes, les charges étant de préférence contenues dans le corps polymère en une quantité de 30-70 % en poids.

15. Électrode de référence selon l'une des revendications 1 à 14, **caractérisée en ce que** le corps polymère comprenant l'élément de décharge est agencé sous une forme tubulaire creuse qui présente une ouverture, le polymère formant une fenêtre vers un échantillon de 0,1 à 10 mm², de préférence de 0,5 à 5 mm².

16. Électrode de référence selon l'une des revendications 2 à 15, **caractérisée en ce que** le corps polymère est formé, au niveau du diaphragme, d'un gel d'électrolyte polymère à hydrophilie augmentée.

17. Procédé de production d'un corps polymère à utiliser pour une électrode de référence selon l'une des revendications 1 à 16, comprenant les étapes:
a) réalisation d'un mélange de segments de prépolymère organiques hydrophobes ainsi que de monomères organiques, hydrophiles et éventuellement hydrophobes, afin d'obtenir un mélange prépolymère-monomère,
b) addition d'une solution d'au moins un sel d'électrolyte au mélange prépolymère-monomère,
c) mélange de la solution de sel d'électrolyte avec le mélange prépolymère-monomère, l'au moins un sel d'électrolyte précipitant en partie sous forme microcristalline et restant en partie dans la solution,
d) polymérisation des monomères pour former des chaînes polymères hydrophiles, qui réticulent de manière tridimensionnelle les segments de prépolymère les uns avec les autres, moyennant quoi le corps polymère est obtenu dans lequel le au moins un sel d'électrolyte est noyé.

18. Procédé selon la revendication 17, **caractérisé en ce que** dans l'étape b), on utilise une solution de sel d'électrolyte avec une saturation de 2-100%, de préférence de 10-100%, la solution de sel électrolytique étant ajoutée de préférence en une quantité de 5-25 % en poids, de préférence 5-10 % en poids, par rapport au mélange prépolymère-monomère.

19. Procédé selon la revendication 17 ou 18, **caractérisé en ce que** la polymérisation selon l'étape d) se réalise au moyen d'un initiateur UV, de préférence choisi dans le groupe des éthers de benzoin ou des acétophénones substituées, tels que par exemple la 2,2-diméthoxy-2-phényl- acétophénone (benzildiméthyl cétal).

20. Procédé selon l'une des revendications 17 à 19, **caractérisé en ce que** dans l'étape c), on effectue en outre un mélange avec au moins une charge inorganique, tel que par exemple avec des silicates ou des oxydes inertes, l'au moins une charge étant de préférence ajoutée en une quantité de 30-70 % en poids par rapport à la quantité totale.

21. Procédé selon l'une des revendications 17 à 20, **caractérisé en ce que** le mélange de la solution de sel d'électrolyte obtenu dans l'étape c) est appliqué avec le mélange prépolymère-monomère sur un support en forme de couche par sérigraphie via un élément de décharge, puis l'étape d) est effectuée pour obtenir une couche de corps polymère.

22. Procédé selon la revendication 21, **caractérisé en ce qu'**une couche isolante, en particulier une couche de vernis isolant durcissant aux UV, est appliquée sur la couche de corps polymère, la couche isolante ayant une ouverture qui fonctionne comme une fenêtre de diaphragme à travers laquelle un échantillon peut être mise en contact avec la couche de corps polymère, l'élément de décharge étant de préférence disposé à une distance de > 1 mm, de préférence d'environ 3 millimètres, de la fenêtre de diaphragme.

23. Procédé selon la revendication 22, **caractérisé en ce que** le corps polymère est formé à partir d'un gel d'électrolyte polymère à hydrophilie augmentée au niveau de l'ouverture fonctionnant comme fenêtre de diaphragme.

24. Procédé selon la revendication 22 ou 23, **caractérisé en ce que** la couche isolante est formée d'un matériau perméable à la vapeur d'eau, de préférence choisi dans le groupe constitué par les silicones, les résines (méth)acrylates, en particulier les résines (méth)acrylates durcissant aux UV, de préférence contenant des chaînes fluoroalcanes et/ou siloxanes.
